# EUROPÄISCHE PATENTSCHRIFT

(11) **EP 2 632 651 B1**
(45) Veröffentlichungstag und Bekanntmachung des Hinweises auf die Patenterteilung: **09.11.2016**
(21) Anmeldenummer: 11761062.6
(22) Anmeldetag: 22.09.2011
(51) Int. Cl.: B25F 5/00, B24B 23/02, B24B 55/00, H02K 7/10, H02P 3/04, B23Q 11/00

(54) **WERKZEUGMASCHINENBREMSVORRICHTUNG**
POWER TOOL BRAKING DEVICE
DISPOSITIF DE FREINAGE DE MACHINE-OUTIL

(30) Priorität: 29.10.2010 DE 102010043184
(43) Veröffentlichungstag der Anmeldung: 04.09.2013
(73) Patentinhaber: Robert Bosch GmbH, 70442 Stuttgart (DE)
(72) Erfinder: ESENWEIN, Florian, 73066 Uhingen-Holzhausen (DE)
(86) Internationale Anmeldenummer: PCT/EP2011/066482
(87) Internationale Veröffentlichungsnummer: WO 2012/055647

(56) Entgegenhaltungen:
- EP-A2- 1 323 501
- EP-A2- 1 327 497
- DE-A1- 3 741 536
- DE-A1- 4 344 424
- DE-A1- 19 510 291
- DE-A1- 19 636 873
- DE-U1-202005 007 459
- GB-A- 372 794
- GB-A- 2 455 528
- JP-A- 61 103 021
- US-A- 5 595 531

## Beschreibung

### Stand der Technik

Aus der DE 199 32 578 B4 ist bereits eine Werkzeugmaschinenbremsvorrichtung einer tragbaren Werkzeugmaschine bekannt, die eine Magnetfeldbremseinheit aufweist.

Ein weiteres Beispiel ist aus DE19636873A1 bekannt.

### Offenbarung der Erfindung

Die Erfindung geht aus von einer Werkzeugmaschinenbremsvorrichtung, insbesondere von einer Handwerkzeugmaschinenbremsvorrichtung, einer tragbaren Werkzeugmaschine mit zumindest einer Magnetfeldbremseinheit, wie im Anspruch 1 dargestellt.

Es wird vorgeschlagen, dass die Werkzeugmaschinenbremsvorrichtung zumindest eine mechanische Aktivierungseinheit aufweist. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 50 kg, bevorzugt kleiner als 20 kg und besonders bevorzugt kleiner als 10 kg. Unter einer "Magnetfeldbremseinheit" soll hier insbesondere eine Bremseinheit, insbesondere eine elektromagnetische Bremseinheit, verstanden werden, die mittels einer Nutzung eines Magnetfelds eine Geschwindigkeit, insbesondere eine Umlaufgeschwindigkeit, eines sich bewegenden Bauteils, insbesondere eines sich drehenden Bauteils, im Vergleich zu einer Arbeitsgeschwindigkeit zumindest im Wesentlichen reibungsfrei verringert und/oder begrenzt, insbesondere zusätzlich zu einem rein reibungsbedingten Verringern und/oder Begrenzen der Geschwindigkeit infolge einer Lagerung des Bauteils. Unter "im Wesentlichen reibungsfrei verringern und/oder begrenzen" soll hier insbesondere ein Abbremsen eines Bauteils verstanden werden, das bis auf lagerbedingte Reibkräfte und/oder strömungsbedingte Widerstandskräfte frei von Reibkräften erfolgt. Insbesondere erfolgt das Abbremsen des Bauteils mittels der Magnetfeldbremseinheit entkoppelt von einem Kontakt zwischen dem Bauteil und einem Reibbelag eines Bremselements. Grundsätzlich ist jedoch auch denkbar, dass zusätzlich zu der zumindest im Wesentlichen reibungsfreien Magnetfeldbremseinheit eine mit der Magnetfeldbremse gekoppelte oder entkoppelte Reibbremseinheit vorgesehen ist. Des Weiteren ist die Magnetfeldbremseinheit insbesondere als eine antriebsfremde Magnetfeldbremseinheit ausgebildet. Unter einer "antriebsfremden Magnetfeldbremseinheit" soll hier insbesondere eine Magnetfeldbremseinheit verstanden werden, die, entkoppelt von einem Magnetfeld einer Elektromotoreinheit, ein Abbremsen eines Bauteils mittels eines Magnetfelds bewirkt. Vorzugsweise sind ein Stator und/oder ein Läufer der Elektromotoreinheit entkoppelt von dem Magnetfeld der Magnetfeldbremseinheit. Die Magnetfeldbremseinheit ist bevorzugt dazu vorgesehen, das Bauteil insbesondere in einem Zeitraum größer als 0,1 s, bevorzugt größer als 0,5 s und besonders bevorzugt kleiner als 3 s, ausgehend von einer Arbeitsgeschwindigkeit, abzubremsen, insbesondere auf eine Geschwindigkeit abzubremsen, die kleiner als 50 % der Arbeitsgeschwindigkeit ist, bevorzugt kleiner als 20 % der Arbeitsgeschwindigkeit ist und besonders bevorzugt auf eine Geschwindigkeit von 0 m/s abzubremsen.

Unter einer "mechanischen Aktivierungseinheit" soll hier insbesondere eine Einheit verstanden werden, die infolge einer Relativbewegung einen Auslösevorgang und/oder einen Aktivierungsvorgang, insbesondere der Magnetfeldbremseinheit, einleitet, wobei die Relativbewegung von einer reinen Schaltbewegung eines Schaltelements zur Erzeugung eines elektrischen Signals abweichend ist und insbesondere von einer Bewegung eines Magnetelements und/oder von einer trägheitsbedingten Bewegung gebildet ist, insbesondere einer trägheitsbedingten Bewegung eines sich drehenden Antriebselements, Abtriebselements und/oder eines Bearbeitungswerkzeugs. In diesem Zusammenhang soll hier unter einem "Auslösevorgang" insbesondere eine mechanische, elektrische, magnetische und/oder elektronische Signalisierung eines Zustands verstanden werden, die dazu vorgesehen ist, einen Aktivierungsvorgang einzuleiten. Unter einem "Aktivierungsvorgang" soll hier insbesondere eine mechanische, elektrische, magnetische und/oder elektronische Aktivierung der Magnetfeldbremseinheit zur Erzeugung von Kräften und/oder Drehmomenten zum Abbremsen eines Bauteils verstanden werden. In diesem Zusammenhang soll unter "vorgesehen" insbesondere speziell programmiert, ausgelegt und/oder ausgestattet verstanden werden. In einer bevorzugten Ausführung der erfindungsgemäßen Werkzeugmaschinenbremsvorrichtung ist die Aktivierungseinheit dazu vorgesehen, den Auslösevorgang und den Aktivierungsvorgang infolge der Relativbewegung einzuleiten, insbesondere zumindest im Wesentlichen zeitlich unverzögert. Hierbei kann die Aktivierungseinheit dazu vorgesehen sein, infolge der Relativbewegung beispielsweise einen Auslösevorgang zu signalisieren und zumindest im Wesentlichen zeitgleich einen Aktivierungsvorgang der Magnetfeldbremseinheit einzuleiten. Eine Ausgestaltung der mechanischen Aktivierungseinheit, bei der durch die Relativbewegung ein Schalter als Auslösevorgang betätigt wird und ein mittels eines Aktors und/oder einer Federkraft und/oder mittels anderer, einem Fachmann als sinnvoll erscheinender Betätigungselemente an den Auslösevorgang anschließender Aktivierungsvorgang eingeleitet wird, ist ebenfalls denkbar. Ferner ist es ebenfalls denkbar, dass die Aktivierungseinheit eine Sensoreinheit umfasst, die die Relativbewegung sensiert und infolgedessen einen Auslösevorgang einleitet, wobei der Aktivierungsvorgang beispielsweise mittels eines Aktors eingeleitet wird.

Eine weitere erfindungsgemäße Ausgestaltung der Werkzeugmaschinenbremsvorrichtung kann darin bestehen, dass die Aktivierungseinheit mechanisch, elektrisch, magnetisch und/oder elektronisch mit einem Elektromagnet der Magnetfeldbremseinheit verbunden ist, wobei der Elektromagnet dazu vorgesehen ist, in zumindest einem Betriebsmodus ein magnetisches Feld der Magnetfeldbremseinheit zu beeinflussen. Der Elektromagnet kann ein zusätzliches Magnetfeld zu einem bereits bestehenden Magnetfeld der Magnetfeldbremseinheit erzeugen. Hierbei ist es denkbar, dass das zusätzliche Magnetfeld in einem Arbeitsmodus zumindest magnetische Kräfte des bereits bestehende Magnetfelds der Magnetfeldbremseinheit zumindest teilweise kompensiert und/oder zumindest im Vergleich zu einer Stärke der magnetischen Kraft des Magnetfelds in einem Bremsmodus zumindest teilweise abschwächt. Der Elektromagnet der Magnetfeldbremseinheit kann vorteilhaft ebenfalls dazu vorgesehen sein, während eines Anlaufens einer Elektromotoreinheit der tragbaren Werkzeugmaschine in einem Betriebsmodus ein zusätzliches Drehmoment zur Erreichung einer Arbeitsdrehzahl der Elektromotoreinheit in einer kurzen Zeitspanne zu ermöglichen, wie vorzugsweise zur Erreichung eines Boostbetriebs. Mittels der erfindungsgemäßen Ausgestaltung der Werkzeugmaschinenbremsvorrichtung kann vorteilhaft eine zuverlässige Auslösung und/oder Aktivierung der Magnetfeldbremseinheit erreicht werden. Ferner können in einer bevorzugten Ausführung der erfindungsgemäßen Werkzeugmaschinenbremsvorrichtung vorteilhaft auf elektrische Bauteile zum Auslösen und/oder Aktivieren der Magnetfeldbremseinheit verzichtet werden. Hierdurch kann vorteilhaft eine Fehleranfälligkeit der Magnetfeldbremseinheit gering gehalten werden.

Des Weiteren wird vorgeschlagen, dass die Aktivierungseinheit infolge einer Relativbewegung wenigstens eine Kenngröße eines magnetischen Felds der Magnetfeldbremseinheit ändert. Unter einer "Kenngröße eines magnetischen Felds" soll hier insbesondere ein Parameter verstanden werden, der ein magnetisches Feld definiert, wie beispielsweise ein magnetischer Fluss, eine magnetische Feldstärke, ein magnetischer Widerstand, eine magnetische Spannung usw. Der Begriff "ändern" soll hier insbesondere einstellen und/oder beeinflussen definieren. Die Relativbewegung ist bevorzugt eine Relativbewegung von zwei Bauteilen einer Abtriebseinheit, einer Antriebseinheit und/oder von zwei Bremselementen der Magnetfeldbremseinheit. Es kann vorteilhaft eine Einstellbarkeit der Magnetfeldbremseinheit infolge der Relativbewegung erreicht werden. Ferner kann vorteilhaft eine Aktivierung der Magnetfeldbremseinheit infolge einer Relativbewegung von zwei relativ zueinander beweglich gelagerten Bauteilen erreicht werden.

Vorzugsweise weist die Magnetfeldbremseinheit zumindest ein Bremselement auf, das als Permanentmagnet ausgebildet ist. Es ist jedoch auch denkbar, dass die Magnetfeldbremseinheit in einer alternativen Ausgestaltung ein als Spule ausgebildetes Bremselement zur Erzeugung eines magnetischen Felds aufweist. Besonders bevorzugt weist die Magnetfeldbremseinheit zumindest zwei Bremselemente auf, die als Permanentmagnete ausgebildet sind. Die zwei als Permanentmagnete ausgebildeten Bremselemente sind bevorzugt relativ zueinander beweglich gelagert, insbesondere relativ zu einander verdrehbar gelagert. Die Permanentmagnete sind vorzugsweise aus Selten-Erd-Magneten, wie beispielsweise Neodym-Eisen-Bor (NdFeB), Samarium-Cobalt (SmCo) usw. ausgeführt. Es ist jedoch auch denkbar, die Permanentmagnete aus einem anderen, einem Fachmann als sinnvoll erscheinenden Werkstoff auszuführen. Die Permanentmagnete sind vorzugsweise kreisringförmig ausgebildet. Des Weiteren weisen die Permanentmagnete vorzugsweise entlang einer Umfangsrichtung angeordnete Winkelsegmente auf, die entlang der Umfangsrichtung eine alternierende Polarität aufweisen. Es kann konstruktiv einfach eine Magnetfeldbremseinheit erreicht werden. Ferner kann vorteilhaft eine von einer Spannungsversorgung unabhängige Magnetfeldbremseinheit erreicht werden.

Ferner wird vorgeschlagen, dass die Aktivierungseinheit eine Polstellung des Permanentmagnets relativ zu einem weiteren als Permanentmagnet ausgebildeten Bremselement der Magnetfeldbremseinheit ändert. Der Ausdruck "Polstellung ändern" soll hier insbesondere eine Änderung einer Stellung von Polen des Permanentmagnets relativ zu Polen des weiteren Permanentmagnets definieren. Bevorzugt werden die Permanentmagnete relativ zueinander um eine Achse verdreht, insbesondere um einen einer Polteilung der Permanentmagnete entsprechenden Winkel. Unter einer "Polteilung" soll insbesondere eine Aufteilung einer Strecke, insbesondere eines Umfangs von 360°, der Permanentmagnete in gleichmäßig entlang einer Richtung, insbesondere der Umfangsrichtung, hintereinander angeordnete Polsegmente, insbesondere Winkelsegmente mit einer Polarität, der Permanentmagnete verstanden werden, wobei die Polsegmente entlang der Richtung eine relativ zueinander wechselnde Polarität aufweisen. Die Pole sind vorzugsweise entlang der Umfangsrichtung relativ zueinander versetzt angeordnet. Hierbei sind die Pole bevorzugt aneinander angrenzend angeordnet. Es ist jedoch auch denkbar, dass die Pole beabstandet zueinander angeordnet sind, insbesondere entlang der Umfangsrichtung betrachtet. Es kann konstruktiv einfach eine Veränderung des magnetischen Felds erzeugt werden, das dazu vorgesehen ist, ein Abbremsen eines sich bewegenden Bauteils zu erreichen.

Vorteilhafterweise ist die Magnetfeldbremseinheit als Wirbelstrombremse ausgebildet. Unter einer "Wirbelstrombremse" soll hier insbesondere eine Bremse verstanden werden, die Wirbelstromverluste eines in einem Magnetfeld bewegten metallischen Elements zum Abbremsen des Elements nutzt. Bevorzugt ist zur Ausgestaltung der Magnetfeldbremseinheit als Wirbelstrombremse zwischen den zumindest zwei Permanentmagneten eine aus einem elektrisch vorteilhaft leitfähigen Material, wie beispielsweise Kupfer und/oder Aluminium, ausgebildete Wirbelscheibe angeordnet. Unter dem Begriff "zwischen" soll hier insbesondere eine räumliche Anordnung verstanden werden, bei der zumindest entlang einer Achse Bauteile hintereinander angeordnet sind und sich, entlang der Achse betrachtet, zumindest teilweise überdecken. Es kann vorteilhaft kostengünstig eine Magnetfeldbremseinheit erreicht werden.

In einer alternativen Ausgestaltung der erfindungsgemäßen Werkzeugmaschinenbremsvorrichtung ist die Magnetfeldbremseinheit als Hysteresebremse ausgebildet. Unter einer "Hysteresebremse" soll hier insbesondere eine Bremse verstanden werden, die mittels einer Ummagnetisierung eines sich in einem Magnetfeld bewegenden Elements, insbesondere eines ferromagnetischen Elements, eine Bremskraft und/oder ein Bremsmoment erzeugt. Bevorzugt ist zur Ausgestaltung der Magnetfeldbremseinheit als Hysteresebremse zwischen den zumindest zwei Permanentmagneten ein aus einem ferromagnetischen Material ausgebildetes Bremselement der Magnetfeldbremseinheit angeordnet. Es kann vorteilhaft eine Magnetfeldbremseinheit mit einer langen Lebensdauer erreicht werden.

Des Weiteren wird vorgeschlagen, dass die Werkzeugmaschinenbremsvorrichtung zumindest eine Antriebseinheit umfasst, die zumindest ein Antriebselement aufweist, an dem zumindest ein Bremselement der Magnetfeldbremseinheit angeordnet ist. Unter einer "Antriebseinheit" soll hier insbesondere eine Einheit verstanden werden, die zumindest eine Elektromotoreinheit umfasst und die dazu vorgesehen ist, mittels einer Energieumformung, insbesondere eine Umformung von elektrischer Energie in mechanische Energie, Antriebskräfte und/oder Antriebsdrehmomente zu erzeugen. Bevorzugt ist die Antriebseinheit mit einer Abtriebseinheit zur Übertragung der Antriebskräfte und/oder der Antriebsdrehmomente auf ein Bearbeitungswerkzeug zur Bearbeitung eines Werkstücks gekoppelt. Mittels einer Anordnung eines Bremselements der Magnetfeldbremseinheit an einem Antriebselement der Antriebseinheit kann vorteilhaft eine kompakte Magnetfeldbremseinheit erreicht werden.

Vorteilhafterweise ist das Antriebselement, an dem das Bremselement zumindest teilweise angeordnet ist, als Ankerwelle ausgebildet. Unter einer "Ankerwelle" soll hier insbesondere eine Welle verstanden werden, auf der zumindest eine magnetisierbare Einheit der Elektromotoreinheit und/oder ein Ritzel zur Übertragung von Kräften und/oder Drehmomenten angeordnet ist. Besonders bevorzugt ist das Bremselement drehfest mit der Ankerwelle verbunden. Es ist jedoch auch denkbar, dass das Bremselement auf einer mit der Ankerwelle, insbesondere mittels einer lösbaren Kupplung, drehfest gekoppelten Welle angeordnet ist. Es kann vorteilhaft ein hoher Wirkungsgrad der Magnetfeldbremseinheit erreicht werden.

Vorzugsweise ist das Bremselement auf einer einer Antriebsseite abgewandten Seite der Antriebseinheit angeordnet. Unter einer "Antriebsseite" soll hier insbesondere eine Seite der Antriebseinheit verstanden werden, die entlang einer Rotationsachse der Antriebseinheit, insbesondere der Ankerwelle der Elektromotoreinheit, einer Abtriebseinheit zugewandt ist und/oder auf der ein Ritzel der Antriebseinheit angeordnet ist, das im Eingriff mit einem Zahnrad einer Abtriebseinheit ist. Es ist jedoch auch denkbar, dass das Bremselement auf der Antriebsseite der Antriebseinheit angeordnet ist. Es kann vorteilhaft bereits vorhandener Bauraum genutzt werden. Ferner kann ein durch eine auf der Antriebsseite angeordnete Lüftereinheit erzeugter Kühlluftstrom zur Kühlung der Antriebseinheit erreicht werden, der entkoppelt von einer Wärmeentwicklung der Magnetfeldbremseinheit ist.

Vorteilhafterweise umfasst die Werkzeugmaschinenbremsvorrichtung zumindest eine Abtriebseinheit, die zumindest ein Abtriebselement aufweist, an dem zumindest ein Bremselement der Magnetfeldbremseinheit angeordnet ist. Unter einer "Abtriebseinheit" soll hier insbesondere eine Einheit verstanden werden, die mittels einer Antriebseinheit antreibbar ist und von der Antriebseinheit erzeugte Kräfte und/oder Drehmomente auf ein Bearbeitungswerkzeug überträgt. Mittels einer Anordnung eines Bremselements der Magnetfeldbremseinheit an einem Abtriebselement der Abtriebseinheit kann vorteilhaft Bauraum eingespart werden.

Des Weiteren wird vorgeschlagen, dass die Abtriebseinheit als Winkelgetriebe ausgebildet ist. Unter einem "Winkelgetriebe" soll hier insbesondere ein Getriebe verstanden werden, das eine relativ zu einer Eingangswelle abgewinkelt angeordnete Ausgangswelle aufweist, wobei die Rotationsachsen der Eingangswelle und der Ausgangswelle vorzugsweise einen gemeinsamen Schnittpunkt aufweisen. Unter "abgewinkelt angeordnet" soll hier insbesondere eine Anordnung einer Achse relativ zu einer weiteren Achse verstanden werden, insbesondere von zwei sich schneidenden Achsen, wobei die zwei Achsen einen von 180° abweichenden Winkel einschließen. Bevorzugt schließen eine Rotationsachse der Eingangswelle und eine Rotationsachse der Ausgangswelle in einem montierten Zustand der als Winkelgetriebe ausgebildeten Abtriebseinheit einen Winkel von 90° ein. Unter einer "Eingangswelle" soll hier insbesondere eine Welle verstanden werden, die Kräfte und/oder Drehmomente in die als Winkelgetriebe ausgebildete Abtriebseinheit einleitet. Die Eingangswelle kann hierbei beispielsweise als eine mit einem Ritzel ausgeführte Ankerwelle einer Elektromotoreinheit der Antriebseinheit ausgebildet sein. Unter einer "Ausgangswelle" soll hier insbesondere eine Welle verstanden werden, die Kräfte und/oder Drehmomente beispielsweise auf ein mit der Ausgangswelle drehfest verbundenes Bearbeitungswerkzeug überträgt. Unter "drehfest" soll insbesondere eine Verbindung verstanden werden, die ein Drehmoment und/oder eine Drehbewegung zumindest im Wesentlichen unverändert überträgt. Unter "zumindest im Wesentlichen unverändert übertragen" soll hier insbesondere eine bis auf einen Verlust infolge von Reibung und/oder von Toleranzen vollständige Übertragung von Kräften und/oder Drehmomenten von einem Bauteil auf ein weiteres Bauteil verstanden werden. Es kann konstruktiv einfach eine Integration der Magnetfeldbremseinheit in die als Winkelgetriebe ausgebildete Abtriebseinheit erreicht werden. Ferner kann vorteilhaft eine Relativbewegung eines Abtriebselements zur Aktivierung der Magnetfeldbremseinheit mittels der mechanischen Aktivierungseinheit genutzt werden.

Vorzugsweise ist die Magnetfeldbremseinheit entlang eines Kraftflusses, insbesondere eines Kraftflusses ausgehend von einer Elektromotoreinheit der Antriebseinheit, zumindest teilweise hinter einem Getriebeeingangszahnrad des Winkelgetriebes angeordnet. Unter einem "Getriebeeingangszahnrad" soll hier insbesondere ein Zahnrad verstanden werden, das in einem montierten Zustand des Winkelgetriebes mit einem Zahnrad der Eingangswelle, insbesondere mit einem Ritzel der Ankerwelle, in Eingriff ist. Es ist jedoch auch denkbar, dass ein als Permanentmagnet ausgebildetes Bremselement an einer einem Bearbeitungswerkzeug zugewandten Seite einer Werkzeugaufnahme angeordnet ist und das Bearbeitungswerkzeug an einer der Werkzeugaufnahme zugewandten Seite ein als Wirbelstromelement und/oder Hystereseelement ausgebildetes Bremselement umfasst. Es kann konstruktiv einfach eine kompakte Magnetfeldbremseinheit erreicht werden, die vorteilhaft auf ein Abtriebselement einwirken kann, um ein Auslaufen eines Bearbeitungswerkzeugs vorteilhaft abzubremsen.

Ferner wird vorgeschlagen, dass die Magnetfeldbremseinheit als Montagemodul ausgebildet ist. Der Ausdruck "Montagemodul" soll hier insbesondere einen Aufbau einer Einheit definieren, bei der mehrere Bauteile vormontiert werden und die Einheit als Ganzes in einem Gesamtsystem, insbesondere in einer tragbaren Werkzeugmaschine, verbaut wird. Das Montagemodul weist bevorzugt zumindest ein Befestigungselement auf, das dazu vorgesehen ist, das Montagemodul mit dem Gesamtsystem lösbar zu verbinden. Vorteilhafterweise kann das Montagemodul insbesondere mit weniger als 10 Befestigungselementen von dem Gesamtsystem demontiert werden, bevorzugt mit weniger als 8 Befestigungselementen und besonders bevorzugt mit weniger als 5 Befestigungselementen. Die Befestigungselemente sind besonders bevorzugt als Schrauben ausgebildet. Es ist jedoch auch denkbar, dass die Befestigungselemente als andere, einem Fachmann als sinnvoll erscheinende Elemente, wie beispielsweise Schnellspannelemente, werkzeuglos betätigbare Befestigungselemente usw., ausgebildet sind. Vorzugsweise kann zumindest eine Funktion des Montagemoduls, insbesondere eine Änderung der Polstellung der Permanentmagnete zur Aktivierung der Magnetfeldbremseinheit, in einem von dem Gesamtsystem demontierten Zustand gewährleistet werden. Das Montagemodul kann besonders bevorzugt von einem Endnutzer demontiert werden. Somit ist das Montagemodul als austauschbare Einheit ausgebildet, die durch ein weiteres Montagemodul ersetzt werden kann, wie beispielsweise im Fall eines Defekts des Montagemoduls oder einer Funktionserweiterung und/oder Funktionsänderung des Gesamtsystems. Mittels einer Ausgestaltung der Magnetfeldbremseinheit als Montagemodul kann vorteilhaft ein breites Einsatzspektrum der Magnetfeldbremseinheit erreicht werden. Eine Integration in bereits bestehende tragbare Werkzeugmaschinen kann ferner konstruktiv einfach erreicht werden. Des Weiteren können somit Produktionskosten vorteilhaft gering gehalten werden.

Die Erfindung geht ferner aus von einer tragbaren Werkzeugmaschine, insbesondere von einer tragbaren Handwerkzeugmaschine, mit einer erfindungsgemäßen Werkzeugmaschinenbremsvorrichtung, insbesondere mit einer Handwerkzeugmaschinenbremsvorrichtung. Die tragbare Werkzeugmaschine kann hierbei als Winkelschleifer, als Bohrmaschine, als Handkreissäge, als Meißelhammer und/oder als Bohrhammer usw. ausgebildet sein. Es kann vorteilhaft eine Sicherheitsfunktion für einen Bediener der tragbaren Werkzeugmaschine erreicht werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Werkzeugmaschine mit einer erfindungsgemäßen Werkzeugmaschinenbremsvorrichtung in einer schematischen Darstellung,
- Fig. 2: eine Detailansicht einer Anordnung der erfindungsgemäßen Werkzeugmaschinenbremsvorrichtung in der erfindungsgemäßen Werkzeugmaschine in einer schematischen Darstellung,
- Fig. 3: eine Detailansicht der erfindungsgemäßen Werkzeugmaschinenbremsvorrichtung in einer schematischen Darstellung,
- Fig. 4: eine weitere erfindungsgemäße Werkzeugmaschine mit einer alternativen Anordnung einer erfindungsgemäßen Werkzeugmaschinenbremsvorrichtung in einer schematischen Darstellung,
- Fig. 5: eine Detailansicht der erfindungsgemäßen Werkzeugmaschinenbremsvorrichtung aus Figur 4 in einer schematischen Darstellung,
- Fig. 6: eine Detailansicht eines Abtriebselements einer Abtriebseinheit einer Magnetfeldbremseinheit der erfindungsgemäßen Werkzeugmaschinenbremsvorrichtung aus Figur 5 in einer schematischen Darstellung,
- Fig. 7: eine Detailansicht eines weiteren Abtriebselements der Abtriebseinheit der Magnetfeldbremseinheit der erfindungsgemäßen Werkzeugmaschinenbremsvorrichtung aus Figur 5 in einer schematischen Darstellung,
- Fig. 8: eine Detailansicht eines als Permanentmagnet ausgebildeten Bremselements der Magnetfeldbremseinheit der erfindungsgemäßen Werkzeugmaschinenbremsvorrichtung in einer schematischen Darstellung,
- Fig. 9: eine Detailansicht der als Montagemodul ausgebildeten Magnetfeldbremseinheit zur Montage an der erfindungsgemäßen Werkzeugmaschineg aus Figur 4 in einer schematischen Darstellung,
- Fig. 10: eine Detailansicht eines zusätzlichen Montagemoduls zur alternativen Montage an der erfindungsgemäßen Werkzeugmaschine aus Figur 4 in einer schematischen Darstellung,
- Fig. 11: eine Detailansicht einer alternativen Ausführung einer erfindungsgemäßen Werkzeugmaschinenbremsvorrichtung in einer schematischen Darstellung und
- Fig. 12: eine Detailansicht einer weiteren alternativen Ausführung einer erfindungsgemäßen Werkzeugmaschinenbremsvorrichtung in einer schematischen Darstellung.

### Beschreibung der Ausführungsbeispiele

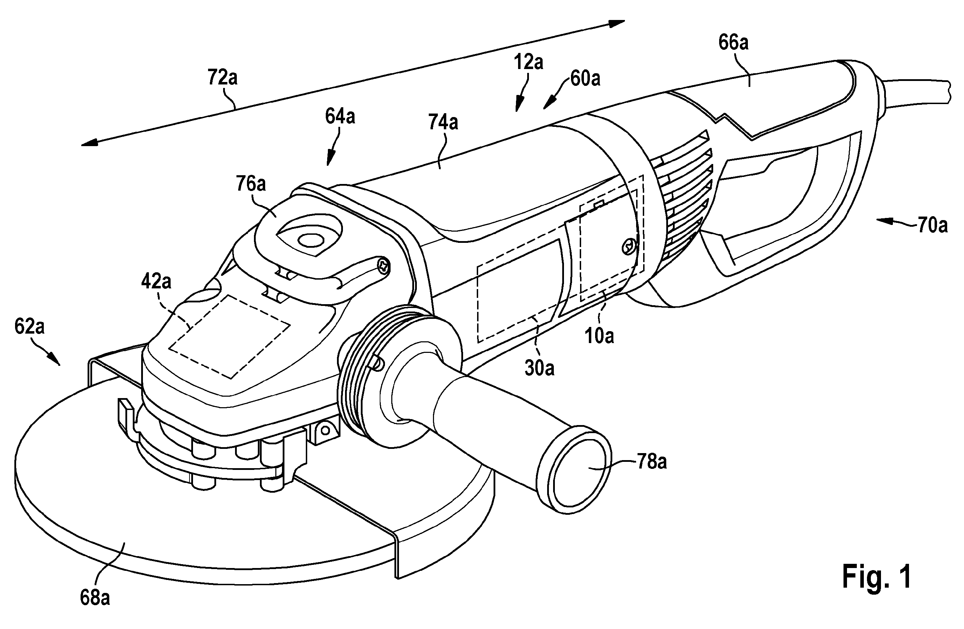

Figur 1 zeigt eine als Winkelschleifer 60a ausgebildete tragbare Werkzeugmaschine 12a mit einer Werkzeugmaschinenbremsvorrichtung 10a. Der Winkelschleifer 60a umfasst eine Schutzhaubeneinheit 62a, ein Werkzeugmaschinengehäuse 64a und einen Haupthandgriff 66a, der sich an einer einem Bearbeitungswerkzeug 68a abgewandten Seite 70a des Werkzeugmaschinengehäuses 64a in Richtung einer Haupterstreckungsrichtung 72a des Winkelschleifers 60a erstreckt. Das Bearbeitungswerkzeug 68a ist hierbei als Schleifscheibe ausgebildet. Es ist jedoch auch denkbar, dass das Bearbeitungswerkzeug 68a als Trenn- oder Polierscheibe ausgebildet ist. Das Werkzeugmaschinengehäuse 64a umfasst ein Motorgehäuse 74a zur Aufnahme einer Antriebseinheit 30a der Werkzeugmaschinenbremsvorrichtung 10a und ein Getriebegehäuse 76a zur Aufnahme einer Abtriebseinheit 42a des Winkelschleifers 60a. Die Antriebseinheit 30a ist dazu vorgesehen, das Bearbeitungswerkzeug 68a über die Abtriebseinheit 42a rotierend anzutreiben. An dem Getriebegehäuse 76a ist ein Zusatzhandgriff 78a angeordnet. Der Zusatzhandgriff 78a erstreckt sich quer zur Haupterstreckungsrichtung 72a des Winkelschleifers 60a.

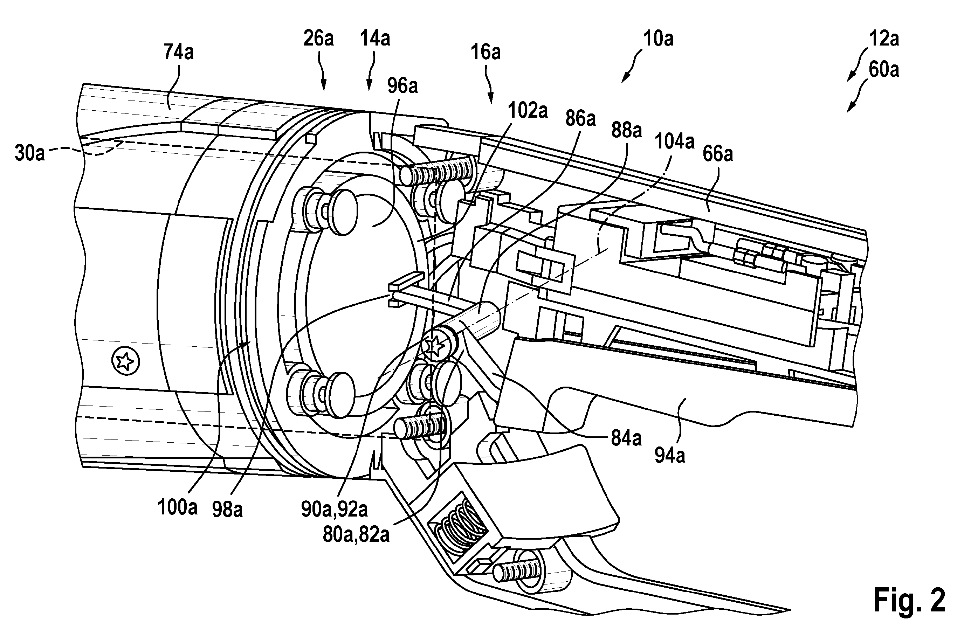

Figur 2 zeigt eine Anordnung der Werkzeugmaschinenbremsvorrichtung 10a im Motorgehäuse 74a des Winkelschleifers 60a. Die Werkzeugmaschinenbremsvorrichtung 10a ist in einem dem Haupthandgriff 66a zugewandten Bereich des Motorgehäuses 74a angeordnet. Die Werkzeugmaschinenbremsvorrichtung 10a umfasst eine Magnetfeldbremseinheit 14a und eine mechanische Aktivierungseinheit 16a, die dazu vorgesehen ist, die Magnetfeldbremseinheit 14a zu aktivieren. Die Magnetfeldbremseinheit 14a ist dazu vorgesehen, das Bearbeitungswerkzeug 68a, das sich infolge einer Massenträgheit des Bearbeitungswerkzeugs 68a nach einem Ausschalten des Winkelschleifers 60a weiterdreht, zu bremsen. Die mechanische Aktivierungseinheit 16a weist ein mechanisches Abtastelement 80a auf. Das Abtastelement 80a ist hierbei als Hebelelement 82a ausgebildet. Das Hebelelement 82a weist zwei zueinander abgewinkelte Hebelarme 84a, 86a auf. Die zwei Hebelarme 84a, 86a sind mittels eines Lagerungselements 88a des Hebelelements 82a starr miteinander verbunden. Das Lagerungselement 88a ist dazu vorgesehen, das Hebelelement 82a mittels eines Zusammenwirkens mit einem als Schraube 90a ausgebildeten Befestigungselement 92a drehbar an einer Innenfläche des Motorgehäuses 74a zu lagern. Das Hebelelement 82a ist dazu vorgesehen, eine Bewegung eines im Haupthandgriff 66a angeordneten Betätigungsschalters 94a des Winkelschleifers 60a abzugreifen und auf ein Betätigungselement 96a der Aktivierungseinheit 16a zu übertragen. Hierbei ist das Hebelelement 82a mit dem dem Haupthandgriff 66a zugewandten Hebelarm 84a mechanisch mit dem Betätigungsschalter 94a des Winkelschleifers 60a gekoppelt. Ferner ist das Hebelelement 82a mit dem dem Haupthandgriff 66a abgewandten Hebelarm 86a mit dem Betätigungselement 96a der Aktivierungseinheit 16a gekoppelt. Der dem Haupthandgriff 66a abgewandte Hebelarm 86a greift hierbei in eine Kopplungsnut 98a des Betätigungselements 96a ein. Das Betätigungselement 96a ist an einer Gehäuseeinheit 100a der Magnetfeldbremseinheit 14a angeordnet. Die Gehäuseeinheit 100a weist ein topfförmiges Aufnahmeelement 102a auf. Das topfförmige Aufnahmeelement 102a ist aus einem unmagnetisierbaren Material, wie beispielsweise Aluminium, Edelstahl usw., gebildet. Das Betätigungselement 96a ist ebenfalls aus einem unmagnetisierbaren Material, wie beispielsweise Aluminium, Edelstahl usw., gebildet. Hierdurch können Streuflüsse der Magnetfeldbremseinheit 14a gering gehalten werden. Das Betätigungselement 96a ist drehbar in dem topfförmigen Aufnahmeelement 102a der Gehäuseeinheit 100a angeordnet. Bei einer Betätigung des Betätigungsschalters 94a durch einen Bediener wird das Hebelelement 82a um eine Schwenkachse 104a, die durch das Lagerungselement 88a und durch die Schraube 90a definiert wird, geschwenkt. Hierbei wird das Betätigungselement 96a zur Aktivierung der Magnetfeldbremseinheit 14a im topfförmigen Aufnahmeelement 102a relativ zum topfförmigen Aufnahmeelement 102a mittels des Hebelelements 82a verdreht.

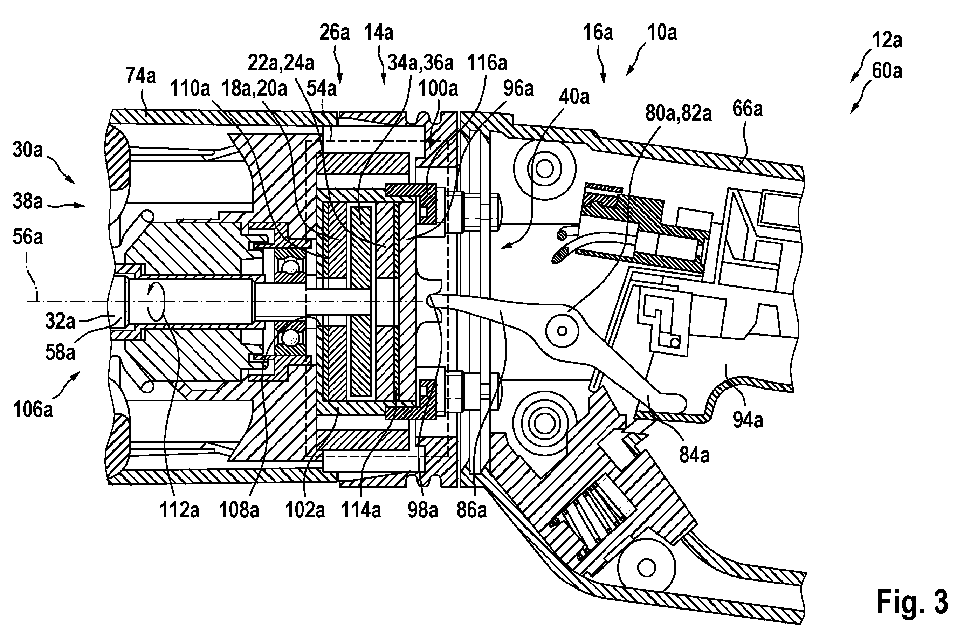

Figur 3 zeigt die Magnetfeldbremseinheit 14a der Werkzeugmaschinenbremsvorrichtung 10a in einer Schnittansicht. Das topfförmige Aufnahmeelement 102a der Gehäuseeinheit 100a wird bei einer Montage entlang einer Rotationsachse 56a eines von einer Ankerwelle 58a gebildeten Antriebselements 32a einer Elektromotoreinheit 106a der Antriebseinheit 42a mit einer zentralen Öffnung 108a des topfförmigen Aufnahmeelements 102a über die Ankerwelle 58a geschoben. Zwischen der zentralen Öffnung 108a und der Ankerwelle 58a können Dichtungselemente angeordnet sein, die ein Eindringen von Schmutz in einem montierten Zustand verhindern können. Das topfförmige Aufnahmeelement 102a der Gehäuseeinheit 100a ist mittels hier nicht dargestellter Halteelemente drehfest und axial im Motorgehäuse 74a fixiert. In dem topfförmigen Aufnahmeelement 102a sind ein Rückschlusselement 110a und ein als erster Permanentmagnet 20a ausgebildetes Bremselement 18a der Magnetfeldbremseinheit 14a angeordnet. Das Rückschlusselement 110a und der erste Permanentmagnet 20a sind drehfest miteinander und drehfest mit dem topfförmigen Aufnahmeelement 102a verbunden. Das Rückschlusselement 110a ist dazu vorgesehen, ein magnetisches Feld des ersten Permanentmagnets 20a im Bereich des ersten Permanentmagnets 20a zu verdichten. Das Rückschlusselement 110a ist aus einem ferromagnetischen Material gebildet. Es ist jedoch auch denkbar, dass das Rückschlusselement 110a aus einem anderen, einem Fachmann als sinnvoll erscheinenden Material gebildet ist. Der erste Permanentmagnet 20a ist kreisringförmig ausgebildet. Ferner weist der erste Permanentmagnet 20a entlang einer Umfangsrichtung 112a gleichmäßig verteilte Winkelsegmente auf. Die Winkelsegmente weisen entlang der Umfangsrichtung 112a eine relativ zueinander wechselnde Polarität auf. Des Weiteren weist die Magnetfeldbremseinheit 14a ein weiteres Bremselement 34a auf, das als Wirbelstromelement 36a ausgebildet ist. Somit ist die Magnetfeldbremseinheit 14a als Wirbelstrombremse 26a ausgebildet. Es ist jedoch auch denkbar, die Magnetfeldbremseinheit 14a als eine andere elektromagnetische Bremseinheit, wie beispielsweise als eine Hysteresebremse, eine Magnetpulverbremse usw., auszubilden. Das Wirbelstromelement 36a ist aus einem elektrisch leitfähigen Material gebildet, wie beispielsweise Aluminium und/oder Kupfer. Ferner ist das Wirbelstromelement 36a kreisringförmig ausgebildet. Das Wirbelstromelement 36a ist drehfest mit der Ankerwelle 58a verbunden. Das als Wirbelstromelement 36a ausgebildete Bremselement 34a ist auf einer einer Antriebsseite 38a abgewandten Seite 40a der Antriebseinheit 30a auf der Ankerwelle 58a angeordnet.

Des Weiteren weist die Magnetfeldbremseinheit 14a ein weiteres als zweiter Permanentmagnet 22a ausgebildetes Bremselement 24a auf. Der zweite Permanentmagnet 22a ist kreisringförmig ausgebildet. Ferner weist der zweite Permanentmagnet 22a entlang der Umfangsrichtung 112a gleichmäßig verteilte Winkelsegmente auf. Die Winkelsegmente weisen entlang der Umfangsrichtung 112a eine relativ zueinander wechselnde Polarität auf. Die Magnetfeldbremseinheit 14a weist ferner ein weiteres Rückschlusselement 114a auf. Das weitere Rückschlusselement 114a ist drehfest mit dem zweiten Permanentmagnet 22a verbunden. Der zweite Permanentmagnet 22a und das Rückschlusselement 114a sind drehfest mit dem Betätigungselement 96a der Aktivierungseinheit 16a verbunden. Das Betätigungselement 96a wird bei einer Montage in das topfförmige Aufnahmeelement 102a der Gehäuseeinheit 100a entlang der Rotationsachse 56a der Ankerwelle 58a eingeschoben, bis das Betätigungselement 96a an einem Bund (hier nicht dargestellt) des topfförmigen Aufnahmeelements 102a anliegt. Der Bund ist dazu vorgesehen, ein Axialspiel zwischen dem zweiten Permanentmagnet 22a und dem Wirbelstromelement 36a, entlang der Rotationsachse 56a der Ankerwelle 58a betrachtet, zu gewährleisten. Zur weiteren axialen Fixierung des Betätigungselements 96a im topfförmigen Aufnahmeelement 102a weist die Gehäuseeinheit 100a ein Verschlusselement 116a auf. Das Verschlusselement 116a wird bei einer Montage auf das topfförmige Aufnahmeelement 102a aufgeschraubt. Es ist jedoch auch denkbar, dass das Verschlusselement 116a mittels einer anderen, einem Fachmann als sinnvoll erscheinenden Verbindungsart, wie beispielsweise mittels Pressen, Kleben usw., mit dem topfförmigen Aufnahmeelement 102a verbunden ist. Zwischen dem Betätigungselement 96a und dem Verschlusselement 116a können Dichtungselemente angeordnet sein, die ein Eindringen von Schmutz verhindern können. Das Wirbelstromelement 36a ist, entlang der Rotationsachse 56a der Ankerwelle 58a betrachtet, zwischen dem ersten Permanentmagnet 20a und dem zweiten Permanentmagnet 22a innerhalb der Gehäuseeinheit 100a der Magnetfeldbremseinheit 14a angeordnet. Des Weiteren dreht sich das Wirbelstromelement 36a in einem Betrieb des Winkelschleifers 60a zusammen mit der Ankerwelle 58a um die Rotationsachse 56a der Ankerwelle 58a relativ zu dem ersten Permanentmagnet 20a und relativ zu dem zweiten Permanentmagnet 22a. Der erste Permanentmagnet 20a, der zweite Permanentmagnet 22a und das Wirbelstromelement 36a weisen entlang der Rotationsachse 56a der Ankerwelle 58a eine axiale Überdeckung auf. Es ist jedoch auch denkbar, dass der erste Permanentmagnet 20a, der zweite Permanentmagnet 22a und das Wirbelstromelement 36a eine radiale Überdeckung oder eine axiale Überdeckung in Kombination mit einer radialen Überdeckung aufweisen.

Die Magnetfeldbremseinheit 14a ist in einem Ruhezustand des Winkelschleifers 60a in einem Bremsmodus. Im Bremsmodus stehen sich jeweils entgegengesetzt gerichtete Polaritäten der Winkelsegmente des ersten Permanentmagnets 20a und der Winkelsegmente des zweiten Permanentmagnets 22a, entlang der Rotationsachse 56a der Ankerwelle 58a betrachtet, gegenüber. Bei einer Inbetriebnahme des Winkelschleifers 60a mittels einer Betätigung des Betätigungsschalters 94a im Haupthandgriff 66a durch den Bediener zur Bestromung der Elektromotoreinheit 106a verdreht das Hebelelement 82a das Betätigungselement 96a relativ zum topfförmigen Aufnahmeelement 102a. Somit wird der zweite Permanentmagnet 22a relativ zum ersten Permanentmagnet 20a verdreht. Hierdurch wird die Magnetfeldbremseinheit 14a in einen Betriebsmodus geschaltet, in dem geringe magnetische Kräfte der Magnetfeldbremseinheit 14a auf das Wirbelstromelement 36a einwirken. Die Aktivierungseinheit 16a ist dazu vorgesehen, infolge der Relativbewegung eine Kenngröße eines magnetischen Felds der Magnetfeldbremseinheit 14a zu ändern. Hierbei ändert die Aktivierungseinheit 16a bei einem Übergang von einem Bremsmodus in einen Betriebsmodus eine Polstellung des ersten Permanentmagnets 20a relativ zu dem zweiten Permanentmagnet 22a der Magnetfeldbremseinheit 14a. Im Betriebsmodus stehen sich somit jeweils gleich gerichtete Polaritäten der Winkelsegmente des ersten Permanentmagnets 20a und der Winkelsegmente des zweiten Permanentmagnets 22a, entlang der Rotationsachse 56a der Ankerwelle 58a betrachtet, gegenüber. Bei einem Ausschalten des Winkelschleifers 60a infolge eines Wegfalls einer Krafteinwirkung des Bedieners auf den Betätigungsschalter 94a im Haupthandgriff 66a verdreht das Hebelelement 82a das Betätigungselement 94a relativ zum topfförmigen Aufnahmeelement 102a. Die Magnetfeldbremseinheit 14a wird in einen Bremsmodus geschaltet. Die zwei Permanentmagnete 20a, 22a werden relativ zueinander verdreht. Der zweite Permanentmagnet 22a wird hierbei relativ zum ersten Permanentmagnet 20a verdreht, bis sich jeweils entgegengesetzt gerichtete Polaritäten der Winkelsegmente des ersten Permanentmagnets 20a und der Winkelsegmente des zweiten Permanentmagnets 22a, entlang der Rotationsachse 56a der Ankerwelle 58a betrachtet, gegenüberstehen. Hierdurch wird im Wirbelstromelement 36a, das sich infolge einer Massenträgheit nach einem Wegfall eines Antriebsmoments weiterdreht, eine Spannung induziert. Die induzierte Spannung bewirkt einen Stromfluss senkrecht und wirbelförmig zu einem magnetischen Fluss der Magnetfeldbremseinheit 14a. Hierbei werden Wirbelströme gebildet. Die Wirbelströme erzeugen in dem Wirbelstromelement 36a ein magnetisches Feld, das einem magnetischen Feld der Permanentmagnete 20a, 22a entgegenwirkt. Hierdurch wird ein Bremsmoment erzeugt, welches das Wirbelstromelement 36a abbremst. Die Ankerwelle 58a wird infolge der drehfesten Verbindung des Wirbelstromelements 36a mit der Ankerwelle 58a ebenfalls abgebremst. Mittels der Kopplung der Antriebseinheit 30a und der Abtriebseinheit 42a wird das Bearbeitungswerkzeug 68a somit ebenfalls abgebremst. Eine Stärke des magnetischen Felds der Magnetfeldbremseinheit 14a und somit eine Ausbreitung eines magnetischen Flusses der Magnetfeldbremseinheit 14a zur Erzeugung des Bremsmoments ist abhängig von einer Distanz entlang der Rotationsachse 56a zwischen dem ersten Permanentmagnet 20a und dem zweiten Permanentmagnet 22a und einer Polstellung entlang der Umfangsrichtung 112a des ersten Permanentmagnets 20a und des zweiten Permanentmagnets 22a relativ zueinander.

Die Aktivierungseinheit 14a weist ferner ein Rückstellelement (hier nicht näher dargestellt) auf, das dazu vorgesehen ist, bei einem Wegfall einer Krafteinwirkung des Bedieners auf den Betätigungsschalter 94a die Magnetfeldbremseinheit 14a zuverlässig in einen Bremsmodus zu schalten. Das Rückstellelement kann hierbei an dem Betätigungselement 96a angeordnet sein oder an dem Hebelelement 82a. Es ist jedoch auch denkbar, dass das Rückstellelement an dem Betätigungsschalter 94a angeordnet ist und auf den Betätigungsschalter 94a einwirkt.

Des Weiteren weist der Winkelschleifer 60a eine Ablaufsicherungseinheit (hier nicht näher dargestellt) auf, die dazu vorgesehen ist, das mittels eines Befestigungselements auf einer Spindel des Winkelschleifers 60a befestigte Bearbeitungswerkzeug 68a in einem Bremsmodus gegen ein Ablaufen von der Spindel zu sichern. Die Ablaufsicherungseinheit ist drehfest mit der Spindel des Winkelschleifers 60a verbunden.

In einer alternativen Ausführung der Werkzeugmaschinenbremsvorrichtung ist es denkbar, die Magnetfeldbremseinheit 14a als Montagemodul 54a (lediglich gestrichelt angedeutet) auszuführen. Hierbei können der erste Permanentmagnet 20a, der zweite Permanentmagnet 22a und das Wirbelstromelement 36a vormontiert in der Gehäuseeinheit 100a ausgebildet sein. Das Wirbelstromelement 36a kann hierbei beispielsweise auf einer Welle drehbar in der Gehäuseeinheit 100a angeordnet sein, die mittels einer Kupplung und/oder eines zwischengeschalteten Getriebes mit der Ankerwelle 58a verbunden werden kann. Ferner ist es bei einer Ausbildung der Magnetfeldbremseinheit 14a als Montagemodul auch denkbar, dass der erste Permanentmagnet 20a, der zweite Permanentmagnet 22a und das Wirbelstromelement 36a vormontiert in der Gehäuseeinheit 100a ausgebildet sein können und das Betätigungselement 96a eine Montageausnehmung aufweist, die dazu vorgesehen ist, einem Bediener eine Montage des Wirbelstromelements 36a auf der Ankerwelle 58a zu ermöglichen. Nach der Montage kann die Montageausnehmung beispielsweise mittels eines Stopfens verschlossen werden. Des Weiteren ist es denkbar, dass die Werkzeugmaschinenbremsvorrichtung 10a eine Sicherheitseinheit aufweist, die dazu vorgesehen ist, die Magnetfeldbremseinheit 14a beispielsweise bei einem Zerbersten eines Werkzeugs zu aktivieren oder bei einer Unterbrechung einer Spannungsversorgung des Winkelschleifers 60a infolge beispielsweise eines defekten Spannungsversorgungskabels zu aktivieren. Die Sicherheitseinheit kann hierbei mechanisch, elektrisch und/oder elektronisch ausgebildet sein. Ferner ist es denkbar, dass die Werkzeugmaschinenbremsvorrichtung 10a zusätzlich zur Magnetfeldbremseinheit 14a eine weitere Magnetfeldbremseinheit aufweist, die im Getriebegehäuse 76a angeordnet ist. Hierbei könnte die Werkzeugmaschinenbremsvorrichtung 10a die Abtriebseinheit 42a umfassen, die ein Abtriebselement aufweist, an dem ein Bremselement der weiteren Magnetfeldbremseinheit angeordnet ist. Ferner ist es denkbar, dass die Werkzeugmaschinenbremsvorrichtung 10a zusätzlich zu einer Lüftereinheit der Antriebseinheit 30a eine Kühleinheit umfasst, die dazu vorgesehen ist, von der Magnetfeldbremseinheit 14a im Bremsmodus infolge einer inneren Reibung des Wirbelstromelements 36a erzeugte Wärme abzuführen.

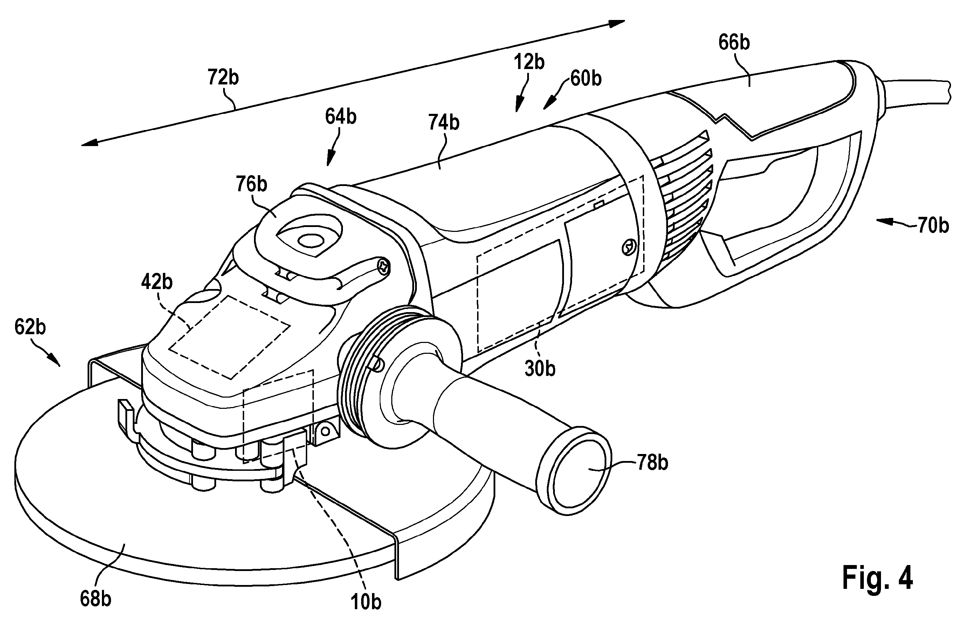

In Figuren 4 bis 12 sind alternative Ausführungsbeispiele dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a bis d hinzugefügt. Die nachfolgende Beschreibung beschränkt sich im Wesentlichen auf die Unterschiede zu dem ersten Ausführungsbeispiel in den Figuren 1 bis 3, wobei bezüglich gleichbleibender Bauteile, Merkmale und Funktionen auf die Beschreibung des ersten Ausführungsbeispiels in den Figuren 1 bis 3 verwiesen werden kann.

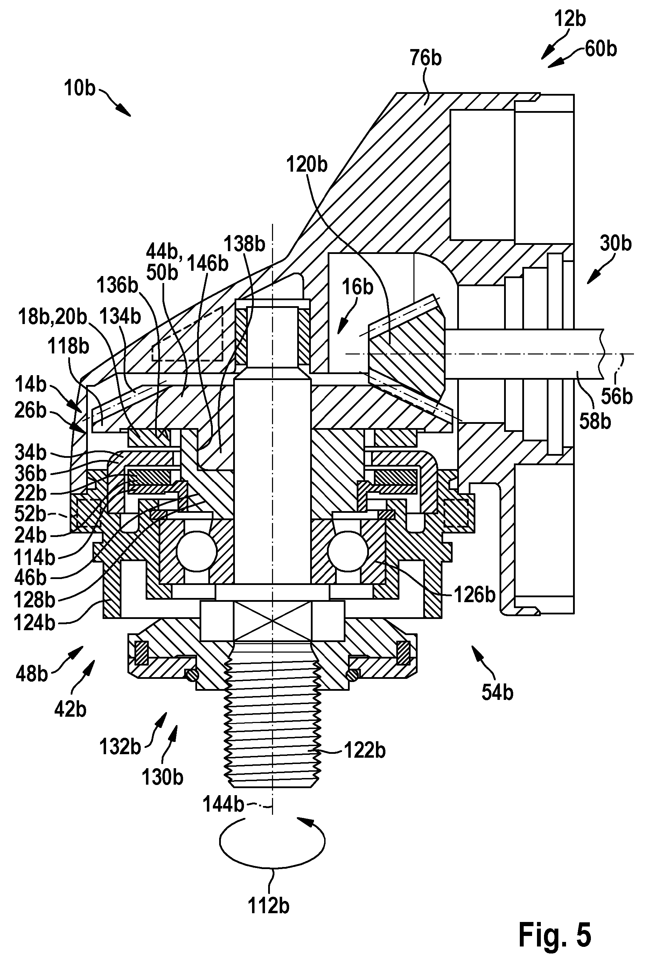

Figur 4 zeigt eine als Winkelschleifer 60b ausgebildete tragbare Werkzeugmaschine 12b mit einer Werkzeugmaschinenbremsvorrichtung 10b. Der Winkelschleifer 60b weist einen im Wesentlichen analogen Aufbau im Vergleich zum Winkelschleifer 60a aus Figur 1 auf. Die Werkzeugmaschinenbremsvorrichtung 10b ist hierbei in einem Getriebegehäuse 76b des Winkelschleifers 60b angeordnet. Ferner weist die Werkzeugmaschinenbremsvorrichtung 10b eine Magnetfeldbremseinheit 14b und eine mechanische Aktivierungseinheit 16b auf (Figur 5). Die Aktivierungseinheit 16b ist dazu vorgesehen, infolge einer Relativbewegung eine Kenngröße eines magnetischen Felds der Magnetfeldbremseinheit 14b zu ändern. Des Weiteren umfasst die Werkzeugmaschinenbremsvorrichtung 10b eine Abtriebseinheit 42b, die ein Abtriebselement 44b aufweist, an dem zumindest ein als erster Permanentmagnet 20b ausgebildetes Bremselement 18b der Magnetfeldbremseinheit 14b angeordnet ist. Die Abtriebseinheit 42b ist als Winkelgetriebe 48b ausgebildet, das zur Drehmomentübertragung mit einer Antriebseinheit 30b des Winkelschleifers 60b gekoppelt ist. Die Magnetfeldbremseinheit 14b ist entlang eines von der Antriebseinheit 30b ausgehenden Kraftflusses hinter einem Getriebeeingangszahnrad 50b des Winkelgetriebes 48b angeordnet. Das Abtriebselement 44b ist hierbei als Tellerrad 118b ausgebildet. Das Tellerrad 118b ist in einem montierten Zustand der Werkzeugmaschinenbremsvorrichtung 10b im Eingriff mit einem Ritzel 120b der Antriebseinheit 30b. Das Getriebeeingangszahnrad 50b wird somit von dem Tellerrad 118b gebildet.

Die Abtriebseinheit 42b umfasst ferner eine drehbar gelagerte Spindel 122b, einen Lagerflansch 124b, ein im Lagerflansch 124b angeordnetes Lagerelement 126b und ein drehfest mit der Spindel 122b gekoppeltes Abtriebselement 46b, das als Mitnahmeelement 128b ausgebildet ist. Das Tellerrad 118b ist mittels einer Spielpassung auf der Spindel 122b angeordnet. Der Lagerflansch 124b ist mittels Befestigungselementen (hier nicht näher dargestellt) der Abtriebseinheit 42b lösbar mit dem Getriebegehäuse 76b verbunden. Ferner kann ein Bearbeitungswerkzeug 68b mittels eines Befestigungselements (hier nicht näher dargestellt) zur Bearbeitung eines Werkstücks drehfest mit der Spindel 122b verbunden werden. Das Bearbeitungswerkzeug 68b kann somit in einem Betrieb des Winkelschleifers 60b rotierend angetrieben werden. Die Werkzeugmaschinenbremsvorrichtung 10b weist des Weiteren eine Ablaufsicherungseinheit 130b auf, die dazu vorgesehen ist, ein Ablaufen des Bearbeitungswerkzeugs 68b und/oder des Befestigungselements von der Spindel 122b in einem Bremsmodus zu verhindern. Die Ablaufsicherungseinheit 130b ist hierbei als Aufnahmeflansch 132b ausgebildet, der mittels eines Formschlusses drehfest mit der Spindel 122b verbunden ist. Es ist jedoch auch denkbar, dass der Aufnahmeflansch 132b mittels anderer, einem Fachmann als sinnvoll erscheinender Verbindungsarten drehfest mit der Spindel 122b verbunden ist.

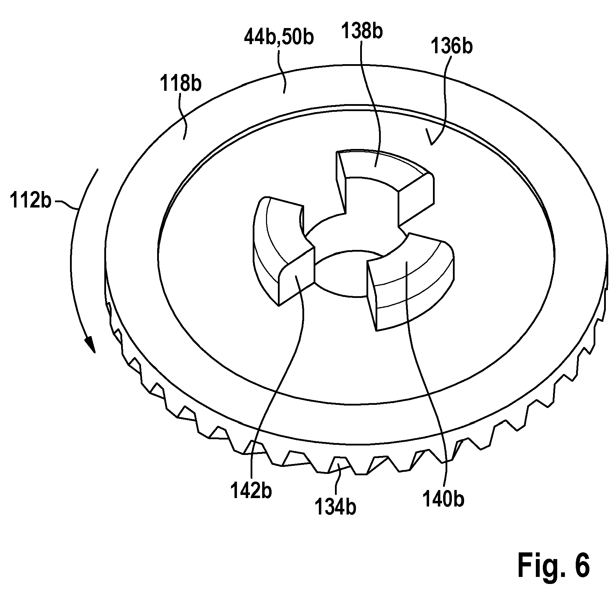

Figur 6 zeigt eine Detailansicht des Tellerrads 118b der Abtriebseinheit 42b. Das Tellerrad 118b ist aus einem magnetisch leitenden Material, wie beispielsweise einem ferromagnetischen Material, gebildet. Hierdurch kann ein magnetisches Feld im Bereich des Tellerrads 118b verdichtet werden und Streuflüsse können gering gehalten werden. Des Weiteren weist das Tellerrad 118b auf einer einer Verzahnung 134b des Tellerrads 118b abgewandten Seite 136b des Tellerrads 118b drei Drehmitnahmeelemente 138b, 140b, 142b auf. Es ist jedoch auch denkbar, dass das Tellerrad 118b eine von drei abweichende Anzahl an Drehmitnahmeelementen 138b, 140b, 142b aufweist. Ein Fachmann wird je nach Anwendungsgebiet eine geeignete Anzahl an Drehmitnahmeelementen 138b, 140b, 142b am Tellerrad 118b vorsehen. Die Drehmitnahmeelemente 138b, 140b, 142b sind entlang einer Umfangsrichtung 112b gleichmäßig verteilt auf der der Verzahnung 134b abgewandten Seite 136b des Tellerrads 118b angeordnet. Die

Umfangsrichtung 112b erstreckt sich hierbei in einer senkrecht zu einer Rotationsachse 144b des Tellerrads 118b verlaufenden Ebene. Das Tellerrad 118b rotiert in einem Betrieb zur Übertragung von Drehmomenten auf das Bearbeitungswerkzeug 68b um die Rotationsachse 144b. Ferner erstrecken sich die Drehmitnahmeelemente 138b, 140b, 142b senkrecht zu der der Verzahnung 134b abgewandten Seite 136b des Tellerrads 118b. In einem montierten Zustand der Abtriebseinheit 42b erstrecken sich die Drehmitnahmeelemente 138b, 140b, 142b in Richtung des Mitnahmeelements 128b (Figur 5).

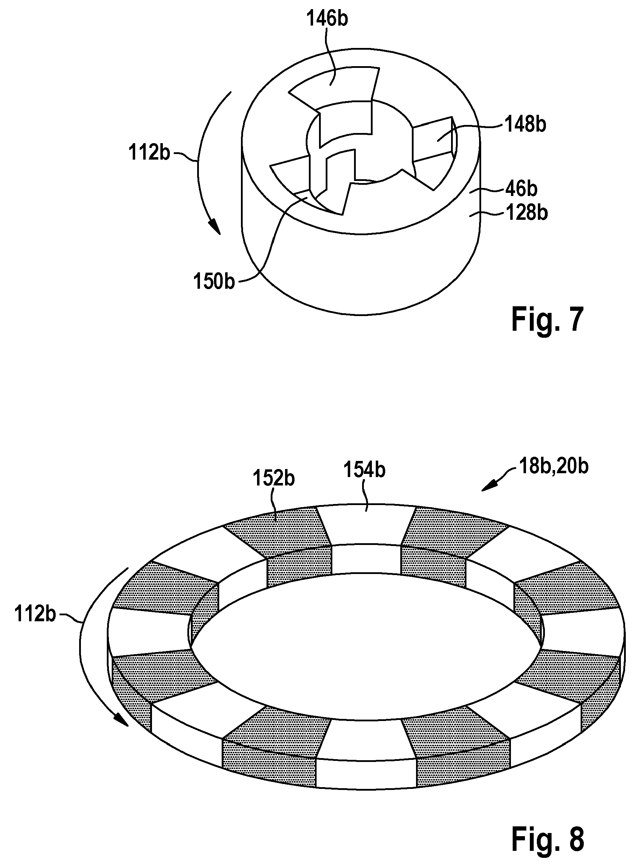

Figur 7 zeigt eine Detailansicht des Mitnahmeelements 128b. Das Mitnahmeelement 128b weist zur Aufnahme der Drehmitnahmeelemente 138b, 140b, 142b Drehmitnahmeausnehmungen 146b, 148b, 150b auf. Die Drehmitnahmeelemente 138b, 140b, 142b erstrecken sich somit in einem montierten Zustand entlang der Rotationsachse 144b des Tellerrads 118b in die Drehmitnahmeausnehmungen 146b, 148b, 150b hinein. Die Drehmitnahmeausnehmungen 146b, 148b, 150b sind entlang der Umfangsrichtung 112b gleichmäßig verteilt am Mitnahmeelement 128b angeordnet. Ferner weisen die Drehmitnahmeausnehmungen 146b, 148b, 150b entlang der Umfangsrichtung 112b eine im Vergleich zu den Drehmitnahmeelementen 138b, 140b, 142b größere Erstreckung auf. Es wird ein Drehspiel zwischen dem Tellerrad 118b und dem Mitnahmeelement 128b entlang der Umfangsrichtung 112b erreicht. Das Drehspiel wird von einem Winkelbereich gebildet, um den das Tellerrad 118b relativ zum Mitnahmeelement 128b gedreht werden kann. Der Winkelbereich wird hierbei durch einen Kreisumfang von 360°, geteilt durch die Anzahl der Pole der Permanentmagnete 20b, 22b, gebildet. Die Drehmitnahmeelemente 138b, 140b, 142b können somit entlang der Umfangsrichtung 112b in den Drehmitnahmeausnehmungen 146b, 148b, 150b relativ zu Randbereichen der Drehmitnahmeausnehmungen 146b, 148b, 150b bewegt werden. Das Mitnahmeelement 128b koppelt bei einem Anliegen der Drehmitnahmeelemente 138b, 140b, 142b an Randbereichen der Drehmitnahmeausnehmungen 146b, 148b, 150b das Tellerrad 118b drehfest mit der Spindel 122b. Die Relativbewegung des Tellerrads 118b relativ zum Mitnahmeelement 128b wird von der Aktivierungseinheit 16b zur Änderung einer Kenngröße eines magnetischen Felds der Magnetfeldbremseinheit 14b genutzt. Es ist jedoch auch denkbar, dass die Drehmitnahmeelemente 138b, 140b, 142b am Mitnahmeelement 128b und die Drehmitnahmeausnehmungen 146b, 148b, 150b am Tellerrad 118b angeordnet sind. Die Drehmitnahmeelemente 138b, 140b, 142b des Tellerrads 118b und die Drehmitnahmeausnehmungen 146b, 148b, 150b des Mitnahmeelements 128b bilden die mechanische Aktivierungseinheit 16b.

Der mit dem Tellerrad 118b drehfest verbundene erste Permanentmagnet 20b ist kreisringförmig ausgebildet (Figur 8). Der erste Permanentmagnet 20b ist auf der der Verzahnung 134b abgewandten Seite 136b des Tellerrads 118b angeordnet. Ferner weist der erste Permanentmagnet 20b entlang der Umfangsrichtung 112b gleichmäßig verteilte Winkelsegmente 152b, 154b auf. Die Winkelsegmente 152b, 154b weisen entlang der Umfangsrichtung 112b eine relativ zueinander wechselnde Polarität auf. Die Polaritäten wechseln entlang der Umfangsrichtung 112b stetig zwischen magnetischem Nordpol und magnetischem Südpol. Die Magnetfeldbremseinheit 14b weist ein weiteres als zweiter Permanentmagnet 22b ausgebildetes Bremselement 24b auf. Der zweite Permanentmagnet 22b ist kreisringförmig ausgebildet und weist entlang der Umfangsrichtung 112b gleichmäßig verteilte Winkelsegmente auf (hier nicht näher dargestellt). Ferner ist der zweite Permanentmagnet 22b drehfest mittels eines Rückschlusselements 114b an dem Mitnahmeelement 128b angeordnet. Das Rückschlusselement 114b ist dazu vorgesehen, ein magnetisches Feld der Magnetfeldbremseinheit 14b im Bereich der Magnetfeldbremseinheit 14b zu verdichten und Streuflüsse gering zu halten.

Des Weiteren weist die Magnetfeldbremseinheit 14b ein weiteres Bremselement 34b auf, das als Wirbelstromelement 36b ausgebildet ist. Somit ist die Magnetfeldbremseinheit 14b als Wirbelstrombremse 26b ausgebildet. Das Wirbelstromelement 36b ist aus einem elektrisch leitfähigen Material gebildet, wie beispielsweise Aluminium und/oder Kupfer. Ferner ist das Wirbelstromelement 36b entlang der Rotationsachse 144b des Tellerrads 118b axial zwischen dem ersten Permanentmagnet 20b und dem zweiten Permanentmagnet 22b angeordnet. Das Wirbelstromelement 36b ist fest mit dem Lagerflansch 124b verbunden. Somit werden der erste Permanentmagnet 20b und der zweite Permanentmagnet 22b in einem Betrieb des Winkelschleifers 60b mittels der Spindel 122b relativ zum Wirbelstromelement 36b bewegt. Zur Vermeidung eines magnetischen Kurzschlusses sind das Mitnahmeelement 128b und die Spindel 122b aus einem unmagnetisierbaren Material ausgebildet, wie beispielsweise Edelstahl usw.

Die Magnetfeldbremseinheit 14b ist in einem Ruhezustand des Winkelschleifers 60b in einem Bremsmodus. Im Bremsmodus stehen sich jeweils entgegengesetzt gerichtete Polaritäten der Winkelsegmente 152b, 154b des ersten Permanentmagnets 20b und der Winkelsegmente des zweiten Permanentmagnets 22b, entlang der Rotationsachse 144b des Tellerrads 118b betrachtet, gegenüber. Bei einer Inbetriebnahme des Winkelschleifers 60b durch eine Bestromung einer Elektromotoreinheit der Antriebseinheit 30b wird das Tellerrad 118b durch das Ritzel 120b angetrieben. Hierbei wird das Tellerrad 118b relativ zum Mitnahmeelement 128b um die Rotationsachse 144b verdreht, bis die Drehmitnahmeelemente 138b, 140b, 142b an Randbereichen der Drehmitnahmeausnehmungen 146b, 148b, 150b anliegen. Hierdurch wird das Tellerrad 118b drehfest mit der Spindel 122b gekoppelt. Die Spindel 122b wird infolgedessen rotierend angetrieben. Das an der Spindel 122b befestigte Bearbeitungswerkzeug 68b wird somit ebenfalls rotierend angetrieben. In einem Betrieb des Winkelschleifers 60b wirken geringe magnetische Kräfte auf das Wirbelstromelement 36b ein. Zur Verringerung der magnetischen Kräfte ist es auch denkbar, dass die Permanentmagnete 20b, 22b zusätzlich zur Verdrehung relativ zueinander mittels der Aktivierungseinheit 16b entlang der Rotationsachse 144b translatorisch relativ zueinander bewegt werden. Hierbei kann eine Distanz zwischen den Permanentmagneten 20b, 22b verändert werden. Es kann beispielsweise eine Nut an der Spindel 122b vorgesehen sein, die entlang der Rotationsachse 144b eine mathematisch definierte Steigung aufweist. In die Nut könnte beispielsweise ein Hubelement eingreifen. Infolge einer Relativbewegung um die Rotationsachse 144b des Tellerrads 118b könnte der erste Permanentmagnet 20b in eine vom Mitnahmeelement 128b weggerichtete Richtung relativ zum zweiten Permanentmagnet 22b bewegt werden.

Der erste Permanentmagnet 20b wird infolge der Relativbewegung zwischen dem Tellerrad 118b und dem Mitnahmeelement 128b relativ zum zweiten Permanentmagnet 22b verdreht. Hierdurch wird die Magnetfeldbremseinheit 14b in einen Betriebsmodus geschaltet, in dem geringe magnetische Kräfte der Magnetfeldbremseinheit 14b auf das Wirbelstromelement 36b einwirken. Die Aktivierungseinheit 16b ändert bei einem Übergang von einem Bremsmodus in einen Betriebsmodus eine Polstellung des ersten Permanentmagnets 20b relativ zu dem zweiten Permanentmagnet 22b der Magnetfeldbremseinheit 14b. Im Betriebsmodus stehen sich somit jeweils gleich gerichtete Polaritäten der Winkelsegmente 152b, 154b des ersten Permanentmagnets 20b und der Winkelsegmente des zweiten Permanentmagnets 22b, entlang der Rotationsachse 144b des Tellerrads 118b betrachtet, gegenüber.

Bei einem Ausschalten des Winkelschleifers 60b wird das Ritzel 120b durch die Elektromotoreinheit abgebremst. Das auf der Spindel 122b befestigte Bearbeitungswerkzeug 68b dreht sich infolge einer Massenträgheit weiter. Die Spindel 122b wird somit ebenfalls weiter um die Rotationsachse 144b gedreht. Das Bearbeitungswerkzeug 68b weist im Vergleich zum Ritzel 120b größere Massenträgheitsmomente auf. Das Ritzel 120b bremst somit das Tellerrad 118b ab. Das Tellerrad 118b wird relativ zum Mitnahmeelement 128b um die Rotationsachse 144b verdreht, bis die Drehmitnahmeelemente 138b, 140b, 142b an Randbereichen der Drehmitnahmeausnehmungen 146b, 148b, 150b anliegen. Die Magnetfeldbremseinheit 14b wird hierbei in einen Bremsmodus geschaltet. Die zwei Permanentmagnete 20b, 22b werden relativ zueinander verdreht. Der erste Permanentmagnet 20b wird hierbei relativ zum zweiten Permanentmagnet 22b verdreht, bis sich jeweils entgegengesetzt gerichtete Polaritäten der Winkelsegmente 152b, 154b des ersten Permanentmagnets 20b und der Winkelsegmente des zweiten Permanentmagnets 22b, entlang der Rotationsachse 144b des Tellerrads 118b betrachtet, gegenüberstehen. Hierdurch wird im Wirbelstromelement 36b eine Spannung induziert. Die induzierte Spannung bewirkt einen Stromfluss senkrecht und wirbelförmig zu einem magnetischen Fluss der Magnetfeldbremseinheit 14b. Hierbei werden Wirbelströme gebildet. Die Wirbelströme erzeugen in dem Wirbelstromelement 36b ein magnetisches Feld, das einem magnetischen Feld der Permanentmagnete 20b, 22b entgegenwirkt. Hierdurch wird ein Bremsmoment erzeugt, das die sich mit der Spindel 122b relativ zum Wirbelstromelement 36b drehenden Permanentmagnete 20b, 22b abbremst. Somit werden die Spindel 122b und das Bearbeitungswerkzeug 68b ebenfalls abgebremst. Eine Stärke des magnetischen Felds der Magnetfeldbremseinheit 14b und somit eine Ausbreitung eines magnetischen Flusses der Magnetfeldbremseinheit 14b zur Erzeugung des Bremsmoments ist abhängig von einer Distanz entlang der Rotationsachse 144b zwischen dem ersten Permanentmagnet 20b und dem zweiten Permanentmagnet 22b und einer Polstellung entlang der Umfangsrichtung 112b des ersten Permanentmagnets 20b und des zweiten Permanentmagnets 22b relativ zueinander.

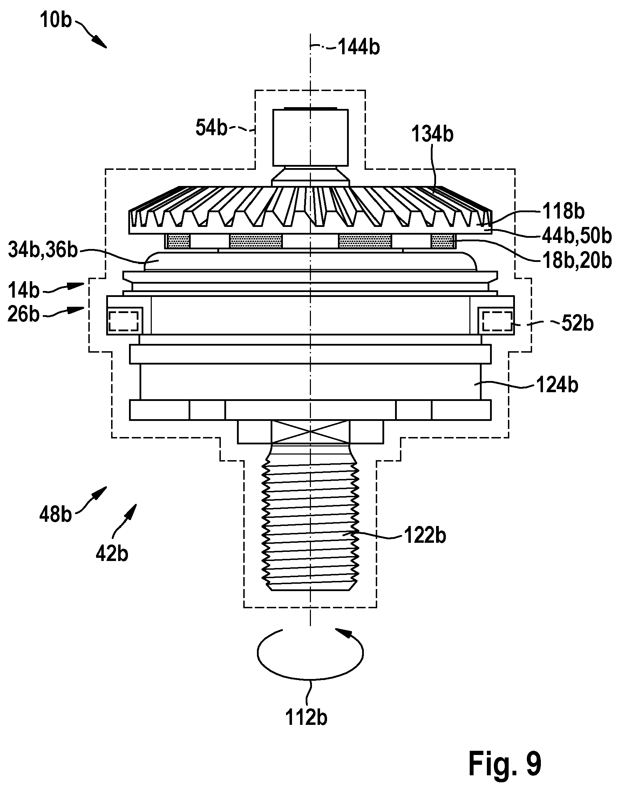

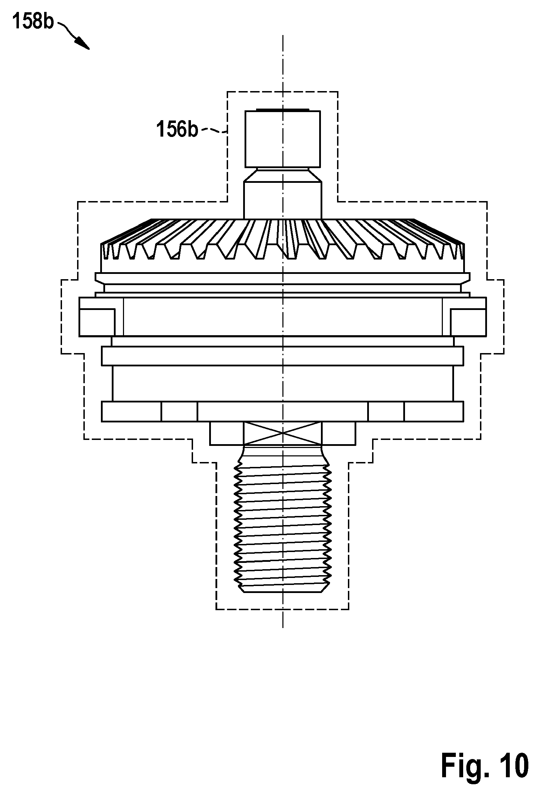

Des Weiteren ist die Magnetfeldbremseinheit 14b zusammen mit der Aktivierungseinheit 16b und der Abtriebseinheit 42b als Montagemodul 54b ausgebildet (Figur 9). Somit bildet das Montagemodul 54b die Werkzeugmaschinenbremsvorrichtung 10b. Das Montagemodul 54b umfasst vier als Schrauben ausgebildete Befestigungselemente (hier nicht dargestellt). Die Schrauben sind dazu vorgesehen, das Montagemodul 54b lösbar mit dem Getriebegehäuse 76b zu verbinden. Ein Bediener kann das Montagemodul 54b bei Bedarf von dem Getriebegehäuse 76b demontieren. Der Winkelschleifer 60b und die Werkzeugmaschinenbremsvorrichtung 10b bilden somit ein Werkzeugmaschinensystem. Das Werkzeugmaschinensystem umfasst ein weiteres Montagemodul 156b (Figur 10). Das weitere Montagemodul 156b umfasst eine als Winkelgetriebe ausgebildete Abtriebseinheit 158b. Das weitere Montagemodul 156b kann vom Bediener alternativ zum Montagemodul 54b am Getriebegehäuse 76b montiert werden. Ein Bediener hat somit die Möglichkeit, den Winkelschleifer 60b mit einem Montagemodul 54b mit einer Magnetfeldbremseinheit 14b, einer Aktivierungseinheit 16b und einer Abtriebseinheit 42b oder mit einem Montagemodul 156b mit einer Abtriebseinheit 158b auszustatten. Für einen Anwendungsfall, in dem der Winkelschleifer 60b entkoppelt von der Werkzeugmaschinenbremsvorrichtung 10b betrieben werden soll, kann das Montagemodul 54b durch das weitere Montagemodul 158b des Werkzeugmaschinensystems von einem Bediener ausgetauscht werden. Hierzu demontiert der Bediener lediglich das Montagemodul 54b von dem Getriebegehäuse 76b und montiert das weitere Montagemodul 158b am Getriebegehäuse 76b.

In einer alternativen Ausführung der Werkzeugmaschinenbremsvorrichtung 10b ist es denkbar, dass die Werkzeugmaschinenbremsvorrichtung 10b zusätzlich zur Magnetfeldbremseinheit 14b eine weitere Magnetfeldbremseinheit aufweist, die in einem Motorgehäuse 74b des Winkelschleifers 60b angeordnet ist. Hierbei könnte die Werkzeugmaschinenbremsvorrichtung 10b die Antriebseinheit 30b umfassen, die ein Antriebselement aufweist, an dem ein Bremselement der weiteren Magnetfeldbremseinheit angeordnet ist. Ferner ist es denkbar, dass die Werkzeugmaschinenbremsvorrichtung 10b eine Kühleinheit umfasst, die dazu vorgesehen ist, von der Magnetfeldbremseinheit 10b im Bremsmodus infolge einer inneren Reibung des Wirbelstromelements 36b erzeugte Wärme abzuführen. Ferner ist es denkbar, dass die Magnetfeldbremseinheit 10b einen Elektromagnet 52b (hier gestrichelt angedeutet) aufweist. Der Elektromagnet 52b kann dazu vorgesehen sein, während eines Anlaufens der Antriebseinheit 30b ein zusätzliches Drehmoment zur Erreichung einer Arbeitsdrehzahl der Elektromotoreinheit in einer kurzen Zeitspanne zu ermöglichen, wie vorzugsweise zur Erreichung eines Boostbetriebs. Es ist jedoch auch denkbar, dass der Elektromagnet 52b dazu vorgesehen ist, ein magnetisches Feld der Permanentmagnete 20b, 22b zu verstärken. Hierdurch kann ein starkes Bremsmoment zum Abbremsen des Wirbelstromelements 36b erreicht werden. Der Elektromagnet 52b kann hierbei beispielsweise mit einer Sicherheitseinheit (hier nicht dargestellt) gekoppelt sein, die den Elektromagnet 52b beispielsweise bei einem Bersten eines Bearbeitungswerkzeugs 68b aktiviert, um ein Weiterdrehen einer Spindel des Winkelschleifers 60b zu verhindern bzw. abzubremsen.

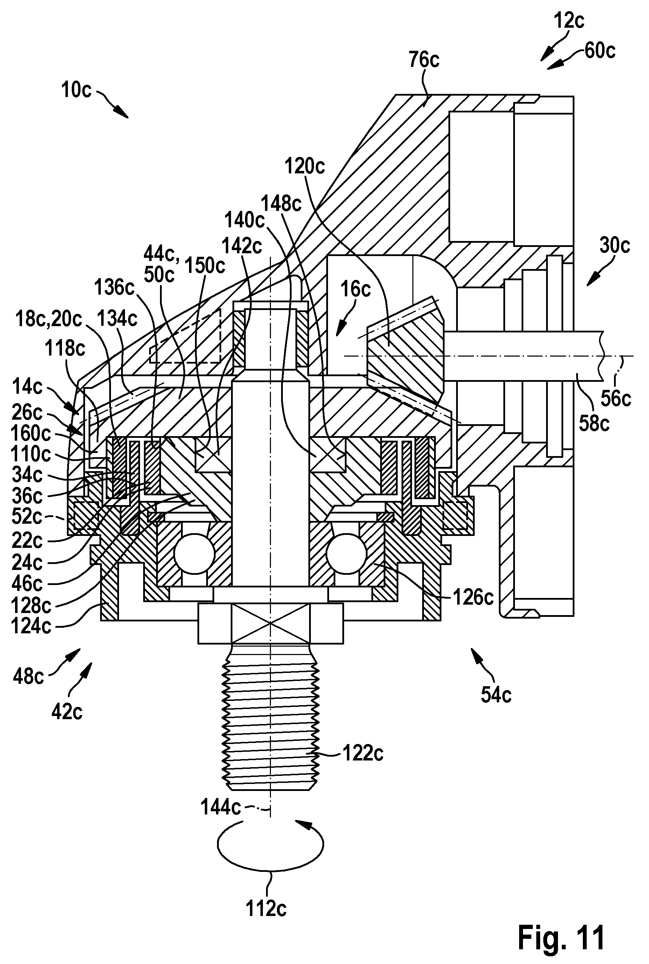

Figur 11 zeigt ein alternativ in einem Getriebegehäuse 76c eines Winkelschleifers 60c angeordnete Werkzeugmaschinenbremsvorrichtung 10c. Die Werkzeugmaschinenbremsvorrichtung 10c umfasst eine Magnetfeldbremseinheit 14c, die als Wirbelstrombremse 26c ausgebildet ist. Ferner umfasst die Werkzeugmaschinenbremsvorrichtung 10c eine mechanische Aktivierungseinheit 16c. Die mechanische Aktivierungseinheit 16c weist einen zur mechanischen Aktivierungseinheit 16b aus Figur 5 analogen Aufbau auf. Die Aktivierungseinheit 16c ist dazu vorgesehen, infolge einer Relativbewegung eine Kenngröße eines magnetischen Felds der Magnetfeldbremseinheit 14c zu ändern. Die Magnetfeldbremseinheit 14c weist ein als erster Permanentmagnet 20c ausgebildetes Bremselement 18c auf, das drehfest mit einem als Tellerrad 118c ausgebildeten Abtriebselement 44c einer Abtriebseinheit 42c der Werkzeugmaschinenbremsvorrichtung 10c verbunden ist. Ferner weist die Magnetfeldbremseinheit 14c ein als zweiter Permanentmagnet 22c ausgebildetes Bremselement 24c auf, das drehfest mit einem als Mitnahmeelement 128c ausgebildeten Abtriebselement 46c der Abtriebseinheit 42c verbunden ist. Das Mitnahmeelement 128c ist aus einem magnetisch leitenden Material ausgebildet, wie beispielsweise einem ferromagnetischen Material. Hierdurch kann ein magnetisches Feld des zweiten Permanentmagnets 22c im Bereich des zweiten Permanentmagnets 22c verdichtet werden und es können Streuflüsse gering gehalten werden.

Die Permanentmagnete 20c, 22c sind rohrförmig ausgebildet. Der erste Permanentmagnet 20c ist hierbei mittels eines Rückschlusselements 110c an einem Bund 160c des Tellerrads 118c angeordnet. Der Bund 160c ist entlang einer Umfangsrichtung 112c entlang eines gesamten Umfangs des Tellerrads 118c angeordnet. Die Umfangsrichtung 112c verläuft in einer senkrecht zu einer Rotationsachse 144c des Tellerrads 118c verlaufenden Ebene. Der Bund 160c erstreckt sich ferner senkrecht zu einer einer Verzahnung 134c abgewandten Seite 136c in eine von der Verzahnung weggerichteten Richtung. Der zweite Permanentmagnet 22c ist an einem sich entlang der Umfangsrichtung 112c erstreckenden Außenumfang des Mitnahmeelements 128c angeordnet. Die Permanentmagnete 20c, 22c sind somit radial entlang einer Richtung senkrecht zur Rotationsachse 144c beabstandet zueinander angeordnet. Die Magnetfeldbremseinheit 14c umfasst ferner ein weiteres als Wirbelstromelement 36c ausgebildetes Bremselement 34c. Das Wirbelstromelement 36c ist entlang der Richtung senkrecht zur Rotationsachse 144c zwischen den Permanentmagnete 20c, 22c angeordnet. Ferner ist das Wirbelstromelement 36c aus einem elektrisch leitfähigen Material gebildet, wie beispielsweise Aluminium und/oder Kupfer. Die Aktivierungseinheit 16c ändert eine Polstellung des ersten Permanentmagnets 20c relativ zum zweiten Permanentmagnet 22c. Hinsichtlich einer Funktionsweise der Aktivierungseinheit 16c und einer Funktionsweise der als Wirbelstrombremse 26c ausgebildeten Magnetfeldbremseinheit 14c kann auf die Beschreibung der Figuren 4 bis 7 verwiesen werden.

Des Weiteren ist die Magnetfeldbremseinheit 14c zusammen mit der Aktivierungseinheit 16c und der Abtriebseinheit 42c als Montagemodul 54c ausgebildet. Somit bildet das Montagemodul 54c die Werkzeugmaschinenbremsvorrichtung 10c.

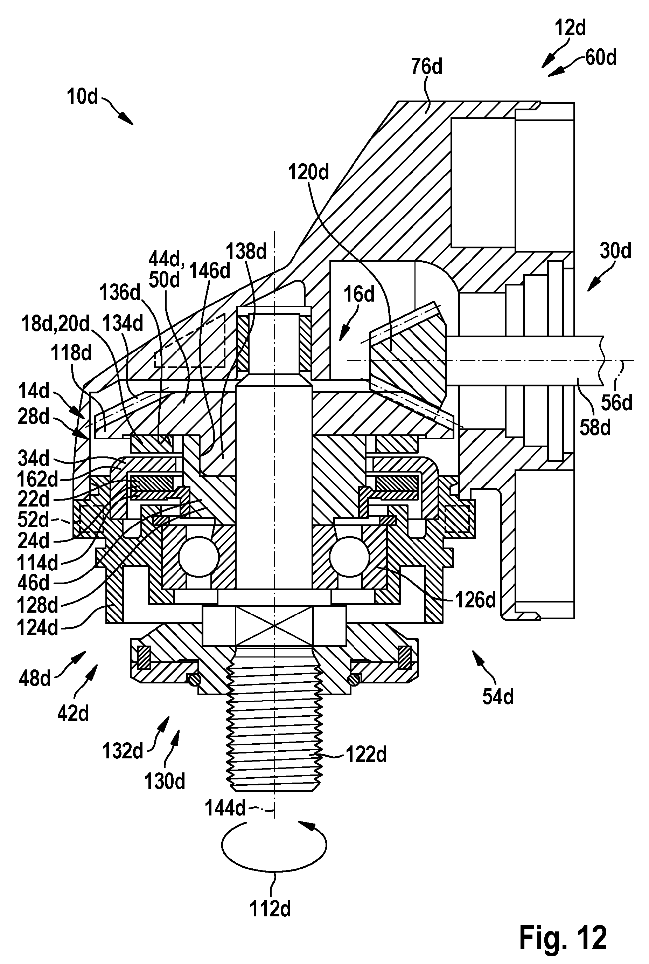

Figur 12 zeigt eine weitere alternative in einem Getriebegehäuse 76d eines Winkelschleifers 60d angeordnete Werkzeugmaschinenbremsvorrichtung 10d. Die Werkzeugmaschinenbremsvorrichtung 10d umfasst eine Magnetfeldbremseinheit 14d, die als Hysteresebremse 28d ausgebildet ist. Ferner umfasst die Werkzeugmaschinenbremsvorrichtung 10d eine mechanische Aktivierungseinheit 16d. Die mechanische Aktivierungseinheit 16d weist einen zur mechanischen Aktivierungseinheit 16b aus Figur 5 analogen Aufbau auf. Die Aktivierungseinheit 16d ist dazu vorgesehen, infolge einer Relativbewegung eine Kenngröße eines magnetischen Felds der Magnetfeldbremseinheit 14d zu ändern. Ferner weist die Magnetfeldbremseinheit 14d einen im Wesentlichen analogen Aufbau im Vergleich zum Aufbau der Magnetfeldbremseinheit 14b aus Figur 5 auf. Die Magnetfeldbremseinheit 14d weist ein als erster Permanentmagnet 20d ausgebildetes Bremselement 18d auf, das drehfest mit einem als Tellerrad 118d ausgebildeten Abtriebselement 44d einer Abtriebseinheit 42d der Werkzeugmaschinenbremsvorrichtung 10d verbunden ist. Ferner weist die Magnetfeldbremseinheit 14d ein als zweiter Permanentmagnet 22d ausgebildetes Bremselement 24d auf, das drehfest mit einem als Mitnahmeelement 128d ausgebildeten Abtriebselement 46d der Abtriebseinheit 42d verbunden ist. Des Weiteren weist die Magnetfeldbremseinheit 14d ein weiteres als Hystereseelement 162d ausgebildetes Bremselement 34d auf. Das Hystereseelement 162d ist entlang einer Rotationsachse 144d des Tellerrads 118d axial zwischen dem ersten Permanentmagnet 20d und dem zweiten Permanentmagnet 22d angeordnet. Es ist jedoch auch denkbar, dass das Hystereseelement 162d entlang einer Richtung senkrecht zur Rotationsachse 144d zwischen den 20d, 22d angeordnet ist (vgl. Figur 11).

In einem Bremsmodus der Magnetfeldbremseinheit 14d stehen sich jeweils gleich gerichtete Polaritäten von Winkelsegmenten des ersten Permanentmagnets 20d und von Winkelsegmenten des zweiten Permanentmagnets 22d, entlang der Rotationsachse 144d des Tellerrads 118d betrachtet, gegenüber. Hierbei wirkt ein magnetisches Feld der Permanentmagnete 20d, 22d auf das Hystereseelement 162d ein. Hierdurch wird ein Kraftlinienfluss entlang einer Umfangsrichtung 112d in dem Hystereseelement 162d erzeugt. Der Kraftlinienfluss erzeugt ein Drehmoment, welches einer Drehbewegung der sich mit einer Spindel 122d der Abtriebseinheit 42d drehenden Permanentmagnete 20d, 22d entgegenwirkt. Somit werden die Permanentmagnete 20d, 22d abgebremst. Das Drehmoment zur Bremsung der Permanentmagnete 20d, 22d erzeugt bei einem Stillstand der Permanentmagnete 20d, 22d eine auf die Permanentmagnete 20d, 22d wirkende Haltekraft. Somit kann die als Hysteresebremse 28d ausgebildete Magnetfeldbremseinheit 14d als Haltebremse eingesetzt werden. In einem Betriebsmodus stehen sich jeweils entgegengesetzt gerichtete Polaritäten der Winkelsegmente des ersten Permanentmagnets 20d und der Winkelsegmente des zweiten Permanentmagnets 22d, entlang der Rotationsachse 144d des Tellerrads 118d betrachtet, gegenüber. Es wirken geringe magnetische Kräfte eines magnetischen Felds der Permanentmagnete 20d, 22d auf das Hystereseelement 162d ein. Hierbei verläuft ein Kraftlinienfluss senkrecht entlang der Rotationsachse 144d durch das Hystereseelement 162d hindurch.

Des Weiteren ist die Magnetfeldbremseinheit 14d zusammen mit der Aktivierungseinheit 16d und der Abtriebseinheit 42d als Montagemodul 54d ausgebildet. Somit bildet das Montagemodul 54d die Werkzeugmaschinenbremsvorrichtung 10d.

## Patentansprüche

1. Werkzeugmaschinenbremsvorrichtung, insbesondere Handwerkzeugmaschinenbremsvorrichtung, einer tragbaren Werkzeugmaschine (12a; 12b; 12c; 12d) mit zumindest einer Magnetfeldbremseinheit (14a; 14b; 14c; 14d), die mittels einer Nutzung eines Magnetfelds eine Geschwindigkeit eines sich bewegenden Bauteils im Vergleich zu einer Arbeitsgeschwindigkeit verringert,
**gekennzeichnet durch** zumindest eine mechanische Aktivierungseinheit (16a; 16b; 16c; 16d), die infolge einer Relativbewegung einen Auslösevorgang und/oder einen Aktivierungsvorgang der Magnetfeldbremseinheit (14a; 14b; 14c; 14d) einleitet, wobei die Relativbewegung von einer reinen Schaltbewegung eines Schaltelements zur Erzeugung eines elektrischen Signals abweichend ist.

2. Werkzeugmaschinenbremsvorrichtung nach Anspruch 1,
**dadurch gekennzeichnet, dass** die Aktivierungseinheit (16a; 16b; 16c; 16d) infolge einer Relativbewegung wenigstens eine Kenngröße eines magnetischen Felds der Magnetfeldbremseinheit (14a; 14b; 14c; 14d) ändert.

3. Werkzeugmaschinenbremsvorrichtung nach einem der vorhergehenden Ansprüche,
**dadurch gekennzeichnet, dass** die Magnetfeldbremseinheit (14a; 14b; 14c, 14d) zumindest ein Bremselement (18a, 24a; 18b, 24b; 18c, 24c; 18d, 24d) aufweist, das als Permanentmagnet (20a, 22a; 20b, 22b; 20c, 22c; 20d, 22d) ausgebildet ist.

4. Werkzeugmaschinenbremsvorrichtung nach Anspruch 3,
**dadurch gekennzeichnet, dass** die Aktivierungseinheit (16a; 16b; 16c; 16d) eine Polstellung des Permanentmagnets (20a; 20b; 20c; 20d) relativ zu einem weiteren als Permanentmagnet (22a; 22b; 22c; 22d) ausgebildeten
Bremselement (24a; 24b; 24c; 24d) der Magnetfeldbremseinheit (14a; 14b; 14c; 14d) ändert.

5. Werkzeugmaschinenbremsvorrichtung nach einem der vorhergehenden Ansprüche,
**dadurch gekennzeichnet, dass** die Magnetfeldbremseinheit (14a; 14b; 14c) als Wirbelstrombremse (26a; 26b; 26c) ausgebildet ist.

6. Werkzeugmaschinenbremsvorrichtung nach einem der Ansprüche 1 bis 4, **dadurch gekennzeichnet, dass** die Magnetfeldbremseinheit (14d) als Hysteresebremse (28d) ausgebildet ist.

7. Werkzeugmaschinenbremsvorrichtung nach einem der vorhergehenden Ansprüche,
**gekennzeichnet durch** zumindest eine Antriebseinheit (30a), die zumindest ein Antriebselement (32a) aufweist, an dem zumindest ein Bremselement (18a, 24a, 34a, 36a) der Magnetfeldbremseinheit (14a) angeordnet ist.

8. Werkzeugmaschinenbremsvorrichtung nach Anspruch 7,
**dadurch gekennzeichnet, dass** das Antriebselement (32a), an dem das Bremselement (34a, 36a) zumindest teilweise angeordnet ist, als Ankerwelle (58a) ausgebildet ist.

9. Werkzeugmaschinenbremsvorrichtung zumindest nach Anspruch 7,
**dadurch gekennzeichnet, dass** das Bremselement (34a, 36a) auf einer einer Antriebsseite (38a) abgewandten Seite (40a) der Antriebseinheit (30a) angeordnet ist.

10. Werkzeugmaschinenbremsvorrichtung nach einem der vorhergehenden Ansprüche,
**gekennzeichnet durch** zumindest eine Abtriebseinheit (42b; 42c; 42d), die zumindest ein Abtriebselement (44b, 46b; 44c, 46c; 44d, 46d) aufweist, an dem zumindest ein Bremselement (18b, 24b; 18c, 24c; 18d, 24d) der Magnetfeldbremseinheit (14b; 14c; 14d) angeordnet ist.

11. Werkzeugmaschinenbremsvorrichtung nach Anspruch 10,
**dadurch gekennzeichnet, dass** die Abtriebseinheit (42b; 42c; 42d) als Winkelgetriebe (48b; 48c; 48d) ausgebildet ist.

12. Werkzeugmaschinenbremsvorrichtung nach Anspruch 11,
**dadurch gekennzeichnet, dass** die Magnetfeldbremseinheit (14b; 14c; 14d) entlang eines Kraftflusses zumindest teilweise hinter einem Getriebeeingangszahnrad (50b; 50c; 50d) des Winkelgetriebes (48b; 48c; 48d) angeordnet ist.

13. Werkzeugmaschinenbremsvorrichtung nach einem der vorhergehenden Ansprüche,
**dadurch gekennzeichnet, dass** die Magnetfeldbremseinheit (14b; 14c;
14d) als Montagemodul (54b; 54c; 54d) ausgebildet ist.

14. Tragbare Werkzeugmaschine, insbesondere Handwerkzeugmaschine, mit einer Werkzeugmaschinenbremsvorrichtung nach einem der vorhergehenden Ansprüche.

## Claims

1. Power tool braking device, in particular hand-held power tool braking device, of a portable power tool (12a; 12b; 12c; 12d) having at least one magnetic field braking unit (14a; 14b; 14c; 14d) which, by means of the use of a magnetic field, reduces a speed of a moving component compared to a working speed, **characterized by** at least one mechanical activation unit (16a; 16b; 16c; 16d) which, as a result of a relative movement, initiates a triggering process and/or an activation process of the magnetic field braking unit (14a; 14b; 14c; 14d), wherein the relative movement is different from a pure switching movement of a switching element for generation of an electrical signal.

2. Power tool braking device according to Claim 1,
**characterized in that** the activation unit (16a; 16b; 16c; 16d) changes at least one characteristic of a magnetic field of the magnetic field braking unit (14a; 14b; 14c; 14d) as a result of a relative movement.

3. Power tool braking device according to one of the preceding claims,
**characterized in that** the magnetic field braking unit (14a; 14b; 14c,14d) comprises at least one braking element (18a, 24a; 18b, 24b; 18c, 24c; 18d, 24d), which is formed as a permanent magnet (20a, 22a; 20b, 22b; 20c, 22c; 20d, 22d).

4. Power tool braking device according to Claim 3,
**characterized in that** the activation unit (16a; 16b; 16c; 16d) changes a pole position of the permanent magnet (20a; 20b; 20c; 20d) relative to a further braking element (24a; 24b; 24c; 24d) of the magnetic field braking unit (14a; 14b; 14c; 14d), said further braking element being formed as a permanent magnet (22a; 22b; 22c; 22d).

5. Power tool braking device according to one of the preceding claims,
**characterized in that** the magnetic field braking unit (14a; 14b; 14c) is formed as an eddy current brake (26a; 26b; 26c).

6. Power tool braking device according to one of Claims 1 to 4,
**characterized in that** the magnetic field braking unit (14d) is formed as a hysteresis brake (28d).

7. Power tool braking device according to one of the preceding claims,
**characterized by** at least one drive unit (30a), which comprises at least one drive element (32a), on which at least one braking element (18a, 24a, 34a, 36a) of the magnetic field braking unit (14a) is arranged.

8. Power tool braking device according to Claim 7,
**characterized in that** the drive element (32a), on which the braking element (34a, 36a) is arranged at least in part, is formed as an armature shaft (58a).

9. Power tool braking device at least according to Claim 7,
**characterized in that** the braking element (34a, 36a) is arranged on a side (40a) of the drive unit (30a) facing away from a driving side (38a).

10. Power tool braking device according to one of the preceding claims,
**characterized by** at least one output unit (42b; 42c; 42d), which comprises at least one output element (44b, 46b; 44c, 46c; 44d, 46d), on which at least one braking element (18b, 24b; 18c, 24c; 18d, 24d) of the magnetic field braking unit (14b; 14c; 14d) is arranged.

11. Power tool braking device according to Claim 10,
**characterized in that** the output unit (42b; 42c; 42d) is formed as a bevel gear (48b; 48c; 48d).

12. Power tool braking device according to Claim 11,
**characterized in that** the magnetic field braking unit (14b; 14c; 14d) is arranged at least in part after an input gearwheel (50b; 50c; 50d) of the bevel gear (48b; 48c; 48d) along a flux of force.

13. Power tool braking device according to one of the preceding claims,
**characterized in that** the magnetic field braking unit (14b; 14c; 14d) is formed as an assembly module (54b; 54c; 54d).

14. Portable power tool, in particular hand-held power tool, having a power tool braking device according to one of the preceding claims.

## Revendications

1. Dispositif de freinage pour machine-outil, notamment dispositif de freinage pour machine-outil manuelle, d'une machine-outil portative (12a ; 12b ; 12c ; 12d), comprenant au moins une unité de freinage à champ magnétique (14a ; 14b ; 14c ; 14d) qui, en utilisant un champ magnétique, réduit une vitesse d'un élément structural en mouvement par rapport à une vitesse de travail,
**caractérisé par** au moins une unité d'activation (16a ; 16b ; 16c ; 16d) qui, en conséquence d'un mouvement relatif, initie un processus de déclenchement et/ou un processus d'activation de l'unité de freinage à champ magnétique (14a ; 14b ; 14c ; 14d), le mouvement relatif étant différent d'un pur mouvement de commutation d'un élément de commutation destiné à générer un signal électrique.

2. Dispositif de freinage pour machine-outil selon la revendication 1, **caractérisé en ce que** l'unité d'activation (16a ; 16b ; 16c ; 16d), en conséquence d'un mouvement relatif, modifie au moins une grandeur caractéristique d'un champ magnétique de l'unité de freinage à champ magnétique (14a ; 14b ; 14c ; 14d).

3. Dispositif de freinage pour machine-outil selon l'une des revendications précédentes, **caractérisé en ce que** l'unité de freinage à champ magnétique (14a ; 14b ; 14c ; 14d) possède au moins un élément de freinage (18a, 24a ; 18b, 24b ; 18c, 24c ; 18d, 24d) qui est réalisé sous la forme d'un aimant permanent (20a, 22a ; 20b, 22b ; 20c, 22c ; 20d, 22d).

4. Dispositif de freinage pour machine-outil selon la revendication 3, **caractérisé en ce que** l'unité d'activation (16a ; 16b ; 16c ; 16d) modifie une position de pôle de l'aimant permanent (20a ; 20b ; 20c ; 20d) par rapport à un autre élément de freinage (24a ; 24b ; 24c ; 24d), réalisé sous la forme d'un aimant permanent (22a ; 22b ; 22c ; 22d), de l'unité de freinage à champ magnétique (14a ; 14b ; 14c ; 14d).

5. Dispositif de freinage pour machine-outil selon l'une des revendications précédentes, **caractérisé en ce que** l'unité de freinage à champ magnétique (14a ; 14b ; 14c) est réalisée sous la forme d'un frein à courants de Foucault (26a ; 26b ; 26c).

6. Dispositif de freinage pour machine-outil selon l'une des revendications 1 à 4, **caractérisé en ce que** l'unité de freinage à champ magnétique (14d) est réalisée sous la forme d'un frein à hystérésis (28d).

7. Dispositif de freinage pour machine-outil selon l'une des revendications précédentes, **caractérisé par** au moins une unité d'entraînement (30a), laquelle possède au moins un élément d'entraînement (32a) sur lequel est disposé au moins un élément de freinage (18a, 24a, 34a, 36a) de l'unité de freinage à champ magnétique (14a).

8. Dispositif de freinage pour machine-outil selon la revendication 7, **caractérisé en ce que** l'élément d'entraînement (32a) sur lequel l'élément de freinage (34a, 36a) est disposé au moins partiellement est réalisé sous la forme d'un arbre d'induit (58a).

9. Dispositif de freinage pour machine-outil selon au moins la revendication 7, **caractérisé en ce que** l'élément de freinage (34a, 36a) est disposé sur un côté (40a) de l'unité d'entraînement (30a) qui se trouve à l'opposé d'un côté d'entraînement (38a).

10. Dispositif de freinage pour machine-outil selon l'une des revendications précédentes, **caractérisé par** au moins une unité de sortie (42b ; 42c ; 42d), laquelle possède au moins un élément de sortie (44b, 46b ; 44c, 46c ; 44d, 46d) sur lequel est disposé au moins un élément de freinage (18b, 24b ; 18c, 24c ; 18d, 24d) de l'unité de freinage à champ magnétique (14b ; 14c ; 14d).

11. Dispositif de freinage pour machine-outil selon la revendication 10, **caractérisé en ce que** l'unité de sortie (42b ; 42c ; 42d) est réalisée sous la forme d'un engrenage angulaire (48b ; 48c ; 48d).

12. Dispositif de freinage pour machine-outil selon la revendication 11, **caractérisé en ce que** l'unité de freinage à champ magnétique (14b ; 14c ; 14d) est disposée le long d'un flux de force au moins partiellement derrière une roue dentée d'entrée d'engrenage (50b ; 50c ; 50d) de l'engrenage angulaire (48b ; 48c ; 48d).

13. Dispositif de freinage pour machine-outil selon l'une des revendications précédentes, **caractérisé en ce que** l'unité de freinage à champ magnétique (14b ; 14c ; 14d) est réalisée sous la forme d'un module de montage (54b ; 54c ; 54d).

14. Machine-outil portative, notamment machine-outil manuelle, équipée d'un dispositif de freinage pour machine-outil selon l'une des revendications précédentes.
